(19) Europäisches Patentamt
European Patent Office
Office européen des brevets

(11) EP 3 020 752 A1

(12) **EUROPÄISCHE PATENTANMELDUNG**

(43) Veröffentlichungstag:
**18.05.2016 Patentblatt 2016/20**

(51) Int Cl.:
***C08J 5/10*** *(2006.01)* ***C08J 5/24*** *(2006.01)*
***C08K 5/5399*** *(2006.01)*

(21) Anmeldenummer: **14193396.0**

(22) Anmeldetag: **17.11.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**50569 Köln (DE)**

(72) Erfinder:
- **ENDTNER, Jochen, Dr.**
  **50679 Köln (DE)**
- **BIENMÜLLER, Matthias, Dr.**
  **47803 Krefeld (DE)**
- **ENZ, Matthias**
  **74532 Ilshofen (DE)**

# (54) Flammgeschützte Faser-Matrix-Halbzeuge

(57) Die Erfindung betrifft flammgeschützte Faser-Matrix-Halbzeuge enthaltend ein faserförmiges Material aus der Gruppe der Gelege, Gewebe, Geflechte, Gestricke, Vliese, Rovings, Matten und Gesticke imprägniert mit einem thermoplastischen Matrixmaterial enthaltend Polycarbonat und Phosphazen-Verbindung, sowie deren Verwendung in Bauteilen mit erhöhten Flammschutzanforderungen, bevorzugt als Gehäusematerialien für elektrische oder elektronische Bauelemente, besonders bevorzugt als Gehäuse für IT-Geräte, insbesondere in Flachbildschirmen, Notebooks, Mobiltelefonen oder Tablet-Computern, als Einbauelement zur Abschirmung u.a. von kurzschlussbedingten Lichtbögen in Leitungsschutzschaltern sowie allgemein als Flammbarriere in Gebäuden, Personenkraftwagen, Lastkraftwagen und in Einrichtungen der Schifffahrt und in öffentlichen Verkehrsmitteln.

EP 3 020 752 A1

## Beschreibung

Die Erfindung betrifft flammgeschützte Faser-Matrix-Halbzeuge enthaltend Polycarbonat als thermoplastisches Matrixmaterial sowie deren Verwendung in Bauteilen mit erhöhten Flammschutzanforderungen, bevorzugt als Gehäusematerialien für elektrische oder elektronische Bauelemente, besonders bevorzugt als Gehäuse für IT-Geräte, insbesondere in Flachbildschirmen, Notebooks, Mobiltelefonen oder Tablet-Computern, als Einbauelement zur Abschirmung u.a. von kurzschlussbedingten Lichtbögen in Leitungsschutzschaltern sowie allgemein als Flammbarriere in Gebäuden, Personenkraftwagen, Lastkraftwagen, in Einrichtungen der Schifffahrt und in öffentlichen Verkehrsmitteln wie z.B. in Schienenfahrzeugen und Bussen.

## Stand der Technik

Organobleche basierend auf Thermoplasten können eine gewichtssparende Alternative gegenüber Materialien wie Aluminium-, Magnesium- oder Stahllegierungen darstellen. Anders als Metallplatten haben sie zusätzlich den Vorteil einer geringeren elektrischen Leitfähigkeit, was gerade in Anwendungen bei elektrischen oder elektronischen Bauteilen von besonderer Bedeutung ist.

Organobleche sind leichte und steife Plattenhalbzeuge aus einer thermoplastischen Matrix, in die Langfasern oder Endlosfasern, teilweise oder vollständig imprägniert, eingebettet sind. Während die Fasern maßgeblich die mechanischen Eigenschaften des Verbunds wie Festigkeit und Steifigkeit bestimmen, überträgt die Matrix aus wenigstens einem Thermoplast die Kräfte zwischen den Fasern, stützt die Fasern gegen Ausknicken und schützt sie vor äußeren Angriffen. Die Fasern können beispielsweise in nur eine Richtung orientiert sein (unidirektional, z.B. als Band (engl. "Tape")), in zwei Richtungen rechtwinklig zueinander stehen (orthotrop oder balanciert), oder quasi-isotrop in jedem nur gewünschten Winkel zu einander platziert werden. Endlosfasern haben den Vorteil, dass sie sehr gestreckt mit hohem Orientierungsgrad und dadurch in größeren Mengen in die Thermoplastmatrix eingebracht werden können. Außerdem ermöglichen Sie den Kraftfluss zwischen Krafteinleitungspunkten innerhalb von Organoblechen allein über die Fasern, was die mechanische Leistungsfähigkeit eines Bauteils auf Basis eines solchen Faser-Matrix-Halbzeugs steigert.

Im Rahmen der vorliegenden Erfindung werden die Begriffe Faser-Matrix-Halbzeug und Organoblech synonym verwendet.

Ein typischer Werkstoff für die thermoplastische Matrix eines Faser-Matrix-Halbzeugs ist Polycarbonat. Polycarbonat hat neben einer sehr guten Schlagzähigkeit auch den Vorteil sehr glatte und gleichmäßige Oberflächen zu erzeugen, was insbesondere für Baugruppen mit hohen optischen Anforderungen eine wichtige Rolle spielt. Hinzu kommt die hohe Transparenz von Polycarbonat als amorphem Thermoplasten, der eine Durchsicht auf die Fasermatrix zulässt was einerseits einen ästhetischen Vorteil z.B. bei Anwendungen für Gehäuse im Endkonsumentenbereich darstellt, andererseits aber auch einen konkreten technischen Vorteil darstellt, da man so Beschädigungen der Fasermatrix leichter erkennen kann.

Ein großer Nachteil von Faser-Matrix-Halbzeugen mit Polycarbonat als thermoplastischem Matrixpolymer ist - insbesondere auch gegenüber Materialien aus Metall - die erhöhte Brennbarkeit, die in Kombination mit dem "Dochteffekt" des Fasermaterials eine direkte Folge der Brennbarkeit der verwendeten Kunststoffmatrix ist. Typisch für den Dochteffekt in Faser-Matrix-Halbzeugen ist die Tatsache, dass der Docht aus dem Fasermaterial selber nicht verbrennt, den Thermoplasten aus organischer Materie jedoch in seinem Brandverhalten fördert. Dies schränkt den Einsatz Thermoplast basierter Faser-Matrix-Halbzeuge gerade in Einsatzbereichen mit erhöhten Flammschutzanforderungen wie z.B. im Elektro- und Elektronikbereich, im IT-Bereich aber auch bei Bauelementen für öffentliche Verkehrsmittel wie z.B. Schiffe, Schienenfahrzeuge und Busse, erheblich ein. So werden gerade im Elektronikbereich häufig nur Materialien zugelassen, die nach UL94 nach Klasse V-0, also ohne brennendes Abtropfen und schnell selbstverlöschend klassifiziert sind (Underwriters Laboratories Inc. Standard of Safety, "Test for Flammability of Plastic Materials for Parts in Devices and Appliances", S. 14 bis S. 18 Northbrook 2006). Ein weiterer Nachteil liegt in der Schwierigkeit, das Fasermaterial vollständig mit der Polycarbonatmatrix zu imprägnieren und auf diese eine perfekte Anbindung von Thermoplastmatrix und Fasermatrix zu erhalten, was wiederum die Voraussetzung für das Erreichen der eingangs beschriebenen sehr hohen Festigkeiten und Steifigkeiten ist.

JP2014-091825 A2 lehrt ein Polycarbonat-basiertes Carbonfaser-Prepreg, bei dem eine Verbesserung der Imprägnierbarkeit durch Verwendung eines Polycarbonates mit einer Schmelzeviskosität von 1 bis 100 Pas in Kombination mit einer unidirektionalen Carbonfasermatrix erreicht wird. Allerdings schränkt eine unidirektionale Fasermatrix das Anwendungsgebiet hinsichtlich mechanischer Belastbarkeit ein. Des Weiteren wird dort kein Lösungsweg zur Verbesserung der Flammschutzeigenschaften aufgezeigt.

In JP2013-256616 A2 wird zur Verbesserung der Imprägnierung ein dreistufiges Verfahren beschrieben, bei dem die Verstärkungsfasern zunächst in einer Lösung enthaltend ein spezielles Polycarbonatcopolymer vorimprägniert, dann zum Austreiben des Lösungsmittels erhitzt und diese vorimprägnierten Verstärkungsfasern dann alternierend mit einer Polycarbonatfolie verpresst werden. Dieses Verfahren gilt als sehr aufwendig und zeigt zudem ebenfalls keinen

Lösungsansatz zur Verbesserung des Selbstverlöschungsverhaltens auf.

In diesem Stand der Technik wird nicht auf die spezielle Problematik eingegangen, die mit den besonderen Flammschutzanforderungen und Imprägnierprozeduren in Faser-Matrix-Systemen, insbesondere basierend auf Glasfasergeweben oder Carbonfasergeweben, bei weitest gehendem Erhalt der Polycarbonat-typischen optischen Transparenz verbunden sind.

Aufgabe der vorliegenden Erfindung war es daher, ein flammgeschütztes Faser-Matrix-Halbzeug auf Basis von Polycarbonat bereitzustellen, das die Klasse V-0 nach UL94 erfüllt und dabei frei von halogenhaltigen Flammschutzmitteln ist. Dabei soll die Additivierung mit dem Flammschutzmittelsystem den Vorgang des Imprägnierens und Konsolidierens des dem Organoblech zugrunde liegenden Fasermaterials nach Möglichkeit nicht beeinträchtigen.

**Erfindung**

Lösung der Aufgabe und Gegenstand der Erfindung ist ein Faser-Matrix-Halbzeug enthaltend

i) mindestens ein faserförmiges Material, ausgewählt aus der Gruppe der Gelege, Gewebe, Gewirke, Geflechte, Gestricke, Vliese, Rovings, Matten, Gesticke und Kombinationen daraus, aus Glasfasern, Carbonfasern, Mineralfasern, Naturfasern, Kunststofffasern und/oder Kombinationen daraus, und

ii) eine thermoplastische Matrix enthaltend

A) 60 bis 97 Gew.-%, bevorzugt 75 bis 90 Gew.-%, besonders bevorzugt 80 bis 82 Gew.-% mindestens eines Thermoplasten aus der Gruppe der Polycarbonate, und

B) 3 bis 40 Gew.-%, bevorzugt 10 bis 25 Gew.-%, besonders bevorzugt 18 bis 20 Gew.-% eines oder mehrerer Phosphazene der Formel (I) und/oder eines oder mehrerer Phosphazene der Formel (II),

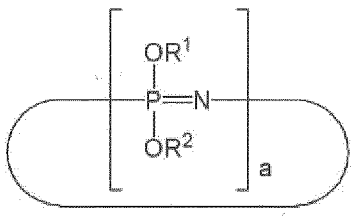

(I)

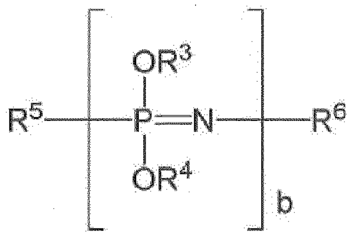

(II)

worin

$R^1$, $R^2$ gleich oder verschieden sind und für ein Alkyl, Cycloalkyl, Aryl oder Alkylaryl stehen,

$R^3$, $R^4$ gleich oder verschieden sind und für Alkyl, Cycloalkyl, Aryl oder Alkylaryl stehen,

$R^5$ für $-N=P(OR^3)_3$, $-N=P(OR^4)_3$, $-N=P(O)OR^3$ oder $-N=P(O)OR^4$ steht,

$R^6$ für $-N=P(OR^3)_4$, $-N=P(OR^4)_4$, $-N=P(O)(OR^3)_2$ oder $-N=P(O)(OR^4)_2$ steht,

a für eine ganze Zahl im Bereich von 3 bis 25 steht und

b für eine ganze Zahl im Bereich von 3 bis 10000 steht,

wobei die Summe der Gewichtsprozente in der thermoplastischen Matrix ii) stets 100 ergibt und wobei das faserförmige

Material i) mit der thermoplastischen Matrix ii) imprägniert ist und der Volumenanteil des faserförmigen Materials i) im Faser-Matrix-Halbzeug im Bereich von 25 bis 65 Vol.-%, bevorzugt im Bereich von 30 bis 60 Vol.-%, besonders bevorzugt im Bereich von 40 bis 55 Vol.-% liegt.

Überraschenderweise zeigen die erfindungsgemäß flammgeschützten Polycarbonat basierten Faser-Matrix-Halbzeuge eine UL94 Klassifizierung von V-0 bei gleichzeitig sehr guten mechanischen Kennwerten.

Zur Klarstellung sei angemerkt, dass im Rahmen dieser Erfindung alle nachfolgend aufgeführten, allgemeinen oder in Vorzugsbereichen genannten Definitionen und Parameter in beliebigen Kombinationen umfasst sind.

Ferner sei zur Klarstellung angemerkt, dass die thermoplastische Matrix ii) in bevorzugter Ausführungsform Zusammensetzungen erhält, die durch Mischen der als Edukte einzusetzenden Komponenten A) und B) in wenigstens einem Mischwerkzeug zuvor produziert wurden. Diese zuvor produzierten Formmassen - auch als thermoplastische Formmassen bezeichnet - können entweder ausschließlich aus den Komponenten A) und B) bestehen, oder aber zusätzlich zu den Komponenten A) und B) wenigstens eine weitere Komponente enthalten, bevorzugt wenigstens eine der Komponenten C) bis F). In diesem Fall ist wenigstens eine der Komponenten A) oder B) im Rahmen der angegebenen Mengenbereiche so zu variieren, dass die Summe aller Gewichtsprozente bezogen auf die thermoplastische Matrix ii) stets 100 ergibt.

Die Biegefestigkeit in der technischen Mechanik ist ein Wert für eine Biegespannung in einem auf Biegung beanspruchten Bauteil, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzeit-Biegeversuch nach ISO 178 werden balkenförmige Probekörper, hier mit den Abmessungen 80 mm · 10 mm · 2,0 mm an den Enden auf zwei Aufleger gelegt und in der Mitte mit einem Biegestempel belastet (Bodo Carlowitz: Tabellarische Übersicht über die Prüfung von Kunststoffen, 6. Auflage, Giesel-Verlag für Publizität, 1992, S. 16-17).

Gemäß "http://de.wikipedia.org/wiki/Biegeversuch" wird das Biegemodul im 3-Punkt-Biegeversuch ermittelt, wobei eine Prüfprobe auf zwei Auflagen positioniert und in der Mitte mit einem Prüfstempel belastet wird. Der Biegemodul berechnet sich bei einer Flachprobe dann wie folgt:

$$E = l_v^3 (X_H - X_L) / 4\, D_L b a^3$$

mit E = Biegemodul in kN/mm$^2$; $l_v$ = Stützweite in mm; $X_H$ = Ende der Biegemodulermittlung in kN; $X_L$ = Beginn der Biegemodulermittlung in kN; $D_L$ = Durchbiegung in mm zwischen $X_H$ und $X_L$; $b$ = Probenbreite in mm; a = Probendicke in mm.

"Alkyl" bezeichnet im Rahmen der vorliegenden Erfindung eine geradkettige oder verzweigte gesättigte Kohlenwasserstoffgruppe. In einigen Ausführungsformen wird eine Alkylgruppe mit 1 bis 6 Kohlenstoffatomen eingesetzt und kann als eine "Niederalkylgruppe" bezeichnet werden. Bevorzugte Alkylgruppen sind Methyl (Me), Ethyl (Et), Propyl, insbesondere n-Propyl und iso-Propyl, Butyl, insbesondere n-Butyl, iso-Butyl, sec-Butyl, tert-Butyl, Pentyl-Gruppen, insbesondere n-Pentyl, iso-Pentyl, neo-Pentyl, Hexylgruppen und dergleichen.

"Aryl" bezeichnet im Rahmen der vorliegenden Erfindung ein monocyclisches aromatisches Kohlenwasserstoff-Ringsystem oder ein polycyclisches Ringsystem, in dem zwei oder mehrere aromatische Kohlenwasserstoff-Ringe kondensiert sind, oder wenigstens einen aromatischen monocyclischen Kohlenwasserstoffring, der mit einem oder mehreren Cycloalkyl- und / oder Cycloheteroalkylringen fusioniert ist. Eine Arylgruppe kann 6 bis 24 Kohlenstoffatome in seinem Ringsystem aufweisen, beispielsweise eine $C_{6-20}$ Arylgruppe, und dabei mehrere kondensierte Ringe enthalten. In einigen Ausführungsformen kann Aryl oder Arylen eine polycyclische Arylgruppe mit 8 bis 24 Kohlenstoffatomen bedeuten. Bevorzugte Arylgruppen mit einem aromatischen carbocyclischen Ringsystem sind Phenyl, 1-Naphthyl (bicyclisch), 2-Naphthyl (bicyclisch), Anthracenyl (tricyclisch), Phenanthrenyl (tricyclisch) Pentacenyl (penta) und ähnliche Gruppen. Andere bevorzugte Arylgruppen sind Benzodioxanyl, Benzodioxolyl, Chromanyl, Indolinyl-Gruppen und dergleichen. In einigen Ausführungsformen können Arylgruppen, wie hierin beschrieben, substituiert sein. In einigen Ausführungsformen kann eine Arylgruppe einen oder mehrere Substituenten aufweisen.

"Cycloalkyl" im Sinne der vorliegenden Erfindung bezeichnet eine nicht-aromatische carbocyclische Gruppe, die cyclisierte Alkyl, Alkenyl oder Alkinyl-Gruppen enthält. In verschiedenen Ausführungsformen enthält eine Cycloalkylgruppe 3 bis 24 Kohlenstoffatome, bevorzugt 3 bis 20 Kohlenstoffatome, z.B eine $C_{3-14}$ Cycloalkylgruppe. Eine Cycloalkylgruppe kann monocyclisch, wie beispielsweise Cyclohexyl, oder aber auch polycyclisch sein, wie beispielsweise in überbrückten und / oder Spiro-Ringsystemen, wobei die Kohlenstoffatome innerhalb oder außerhalb des Ringsystems sich befinden können. Jede geeignete Ringposition der Cycloalkylgruppe kann kovalent an die definierte chemische Struktur gebunden sein. Bevorzugte Cycloalkylgruppen sind Cyclopropyl, Cyclobutyl, Cyclopentyl, Cyclohexyl, Cycloheptyl, Cyclopentenyl, Cyclohexenyl, Cyclohexadienyl, Cycloheptatrienyl, Norbornyl, Norpinyl, Norcaryl, Adamantyl und Spiro [4.5] decanyl-Gruppen sowie deren Homologe, Isomere und dergleichen. In einigen Ausführungsformen können die Cycloalkylgruppen substituiert sein. Erfindungsgemäß bevorzugt sind unsubstituierte Cycloalkylgruppen.

"Arylalkyl" im Sinne der vorliegenden Erfindung bedeutet eine Alkyl-Aryl-Gruppe, wobei die Arylalkyl-Gruppe kovalent an die definierte chemische Struktur durch die Alkylgruppe gebunden ist. Eine erfindungsgemäß bevorzugte Arylalkylgruppe ist die Benzyl-Gruppe ($-CH_2-C_6H_5$). Arylalkylgruppen gemäß der vorliegenden Erfindung können wahlweise substituiert sein, das heißt, entweder die Arylgruppe und / oder die Alkyl-Gruppe kann substituiert sein.

**Bevorzugte Ausführungsformen der Erfindung**

Als Organobleche bezeichnete Faser-Matrix-Halbzeuge und ihre Herstellung sowie Verwendung sind dem Fachmann bekannt. Verwiesen sei hier nur auf DE 19923480 A1, DE 20 2006 019341 U1, DE10 2009 051058 A1, DE 10 2010 053381 A1, DE 10 2011117338 A1, DE 10 2012 015438 A1 und DE 10 2012 111087 B3.

Besonders bevorzugte Methoden sind die diskontinuierliche Herstellung mit statischen Plattenpressen oder die kontinuierliche Herstellung mit Doppelwandpressen wie in z.B. in DE 41 16 800 A1 beschrieben. Möglich ist auch das sogenannte Film-Stacking-Verfahren, das ergänzt um dessen Weiterentwicklung für den Produktionsmaßstab z.B. in DE 41 04 692 A1 erläutert ist.

Die Verwendung von Thermoplasten in Form von feingranularen Materialien, respektive Pulvern, zur Herstellung von Faserverbundwerkstoffvorprodukten (Thermoplastische Prepregs) ist bereits aus der DE 698 03 697 T2 bekannt, in der vorgeschlagen wird, mittels elektrostatischer Imprägnierung Pulver homogen in die Faserschichten einzubringen. Auch das Trockenimprägnieren eines Verstärkungs-materials, das aus Fasern bestehen kann, zur Herstellung eines Komposits ist aus der DE 691 30 111 T2 bekannt. Werden Fasergewebe oder Fasergeflechte, etwa aus Glasfasern, Kevlarfasern oder Carbonfasern, in definierten Orientierungen in eine Thermoplastmatrix eingebettet und zu Platten verpresst, erhält man das Organoblech zur weiteren Fertigung von FVK-Bauteilen.

Die für die spätere Bauteilgeometrie erforderliche Umformung des thermoplastischen Faser-Matrix-Halbzeugs kann im klassischen Thermoformverfahren oder in einem Spritzgießwerkzeug während des Schließens der dabei zum Einsatz kommenden Spritzgießform erfolgen.

Das Thermoformverfahren dient der Herstellung dreidimensionaler Formteile aus flächenförmigen thermoplastischen Kunststoffhalbzeugen (Folien und Platten) unter Verstreckung im thermoelastischen Materialzustand (Herrlich, Land, Kunz, Michaeli, "Kunststoffpraxis: Eigenschaften", WEKA MEDIA Kissing, 2004, Teil 10 Kapitel 7.1 Seite 1-5, Teil 10 Kapitel 7.4 Seite 1-2; Michaeli, "Einführung in die Kunststoffverarbeitung.pdf", Carl Hanser Verlag, München 2010, Seiten 185-190).

Der Verfahrensablauf der thermischen Umformung von Faser-Matrix-Halbzeugen ist durch folgende Prozessschritte gekennzeichnet (Industrievereinigung Verstärkte Kunststoffe, "Handbuch Faserverbund-Kunststoffe", Vieweg + Teubner, Wiesbaden 2010, Seiten 477-482):

1. Manuelles oder automatisiertes Einlegen des Halbzeugs in eine Haltevorrichtung (Spannrahmen)
2. Aufheizen des Halbzeugs
3. Umformen des Halbzeugs
4. Abkühlen des umgeformten Halbzeugs
5. Entformen des umgeformten Halbzeugs

Die Umformung des Faser-Matrix-Halbzeugs kann aber auch in einer Presse erfolgen, unter anschließender Überführung in ein Spritzgießwerkzeug.

Vor der weiteren Verarbeitung können die umgeformten Faser-Matrix-Halbzeuge besäumt oder in anderer Weise nachbearbeitet werden.

Faser-Matrix-Halbzeuge, insbesondere auf Thermoplasten basierend, werden in folgende Gruppen unterteilt (Schürmann, "Konstruieren mit Faser-Kunststoff¬-Verbunden", Springer-Verlag Berlin Heidelberg 2005, 2007, Seiten 156-157):

- Mit Langfasern verstärkte Systeme:
  - GMT: glasmattenverstärkte Thermoplaste;
  - LFT: langfaserverstärkte Thermoplaste
- Mit Endlosfasern verstärkte Systeme

In Abhängigkeit vom Herstellungsverfahren und dem daraus resultierenden unterschiedlichen Imprägnierungs- und Konsolidierungsgrad unterscheidet man die folgenden thermoplastischen Prepregs ("Faserverstärkte Kunststoffe verarbeiten", Kunststoffe 10/2003, Carl Hanser Verlag, Seiten 189-194):

- Textil- bzw. Hybridgarn-Prepregs: Herstellung mittels textiler Verarbeitungsprozesse aus

    1. Polymerfasern und Verstärkungsfasern oder

    2. Hybridgarn

- Pulver-Prepregs: Herstellung über einen Pulveraufstreuprozess

- Lösungsmittel-Prepregs: Herstellung über ein Lösungsmittelbad

- Film- und Schmelze-Prepregs: Herstellung über einen Press- oder Kaschierprozess mit einer Schmelze oder einer Folie.

Prepreg ist gemäß http://de.wikipedia.org/wiki/Prepreg die englische Kurzform für preimpregnated fibres (amerikanisch: preimpregnated fibers), zu Deutsch: "vorimprägnierte Fasern". Prepreg bezeichnet ein Halbzeug, bestehend aus Lang- oder Endlosfasern und einer vorgetrockneten bzw. vorgehärteten, jedoch noch nicht polymerisierten duroplastischen Kunststoffmatrix, das v. a. im Leichtbau Verwendung findet. Im Rahmen der vorliegenden Anmeldung wird dieser Begriff auch in Bezug auf eine thermoplastische Kunststoffmatrix angewandt.

**Komponente i)**

Als faserförmiges Material i) enthalten die erfindungsgemäßen Faser-Matrix-Halbzeuge mindestens ein faserförmiges Material ausgewählt aus der Gruppe der Gelege, Gewebe, Gewirke, Geflechte, Gestricke, Vliese, Rovings, Matten, Gesticke und Kombinationen daraus, bevorzugt Matten, Gelege oder Gewebe, besonders bevorzugt Gewebe.

Vorzugsweise bestehen diese faserförmigen Materialien aus Glasfasern, Carbonfasern, Mineralfasern, Naturfasern, Kunststofffasern und/oder Kombinationen daraus, besonders bevorzugt aus Glasfasern oder Carbonfasern und/oder Kombinationen daraus, ganz besonders bevorzugt aus Glasfasern.

Der mittlere Faserdurchmesser liegt bevorzugt in einem Bereich von 5 bis 25 $\mu$m, besonders bevorzugt in einem Bereich von 6 bis 18 $\mu$m. Eine direkte Bestimmung von Gewicht und Länge, die für die Ermittlung der Faserfeinheit benötigt werden, ist in der DIN EN ISO 1973,[22] angeführt. Bei diesem gravimetrischen Prüfverfahren (Wägemethode) werden Faserbündel, die eine bestimmte Faseranzahl enthalten, auf eine festgelegte Schneidlänge geschnitten und anschließend ausgewogen. Die mittlere Feinheit Tt der Fasern (in dtex) kann dann aus dem Gewicht m des Bündels in mg, der Schnittlänge I in mm und der Faseranzahl nach

Faserfeinheit Tt (in dtex) = 10000 • Masse m (in mg) / [Schnittlänge I (in mm) • Faseranzahl Z] errechnet werden. Siehe hierzu: http://de.wikipedia.org/wiki/Feinheit_(Textilien). Darin beschrieben ist auch die Gewichtsnummerierung nach dem Tex-System gemäß ISO1144 und DIN60905, Teil 1.

Eine Längen- und Dickenbestimmung der Einzelfaser kann alternativ aber auch, wie in EP 0399320 B2 beschrieben, halbautomatisch anhand rasterelektronenmikroskopischer Bilder (REM) mittels Grafiktableau und rechnergestützter Datenerfassung bestimmt werden. Aus den Längen- und Dickenverteilungen werden dann Faservolumina und Faserzahlen pro Masseneinheit bestimmt.

Bevorzugt werden folgende Verstärkungsfasern als kontinuierliche (endlose) Faserverstärkung bzw. Langfaserverstärkung alleine oder in Mischungen eingesetzt:

- Glasfasern (Oberbach, Baur, Brinkmann, Schmachtenberg, "Saechtling Kunststoff Taschenbuch", Carl Hanser Verlag München Wien 2004, Seiten 644-647),

- metallisierte Glasfasern

- Kohlenstofffasern, häufig auch als "Carbonfasern" bezeichnet. (Oberbach, Baur, Brinkmann, Schmachtenberg, "Saechtling Kunststoff Taschenbuch", Carl Hanser Verlag München Wien 2004, Seite 648),

- Naturfasern, insbesondere Flachsfasern (Oberbach, Baur, Brinkmann, Schmachtenberg, "Saechtling Kunststoff Taschenbuch", Carl Hanser Verlag München Wien 2004, Seiten 650-652, 778-779),

- Kunststofffasern, insbesondere Aramidfasern (Oberbach, Baur, Brinkmann, Schmachtenberg, "Saechtling Kunststoff Taschenbuch", Carl Hanser Verlag München Wien 2004, Seiten 648-650), bevorzugt Aramidfasern (Kunststoff-Handbuch, Bd. 3/4, Seiten 106-107, Carl Hanser Verlag München Wien 1998),
- Mineralfasern, insbesondere Basaltfasern.

In einer besonders bevorzugten Ausführungsform liegt die Faser in Form einer Endlosfaser vor. Eine Endlosfaser ist gemäß DIN 60000 ein linienförmiges Gebilde von praktisch unbegrenzter Länge, das sich textil verarbeiten lässt. Bei Chemiefasern spricht man von Filamenten. In der DIN 60001 wird Filament als Faser von mindestens 1000 mm Länge definiert.

Die erfindungsgemäß bevorzugte Langfaserverstärkung oder Endlosfaserverstärkung basiert auf Verstärkungstextilien in Form von Gelegen, Geweben, Gewirken, Geflechten, Gestricken, Matten, Gesticken und/oder Kombinationen daraus ("Maßgeschneiderte Verstärkungstextilien", Kunststoffe 06/2003, Carl Hanser Verlag, Seiten 46-49). Dabei kann sowohl Rovingglas als auch Filamentglas zum Einsatz kommen. Rovingglas wird im allgemeinen vor dem Verweben mit der endgültigen Schlichte versehen, während Filamentglas üblicherweise erst nach dem Verwebeprozess mit der endgültigen Schlichte behandelt wird. Die Schlichte ist eine Imprägnierflüssigkeit, welche als Haftvermittler auf textile Fäden/Fasern etwa durch Sprühen oder Tauchen vor der Weiterverarbeitung aufgebracht wird. Ein beschlichteter Faden bzw. eine beschlichtete Faser ist geschmeidiger und widerstandsfähiger gegen mechanische Belastung. Mit Hilfe einer Schlichte wird in erster Linie eine verbesserte Haftung zum einzusetzenden Thermoplasten eines Organoblechs angestrebt. Die Endlosfaserverstärkung kann aber ebenfalls aus Vliesen, Faserkabeln oder Rovings bestehen. Besonders bevorzugt sind Gewebe und Gelege, insbesondere bevorzugt sind Gewebe. Dabei wird bevorzugt Köpergewebe (engl. "Twill"), Atlasgewebe (engl. "Satin") und Leinwandgewebe (engl. "Plain") eingesetzt, wobei Köpergewebe besonders bevorzugt und die Köper-Webart Twill 2/2 ganz besonders bevorzugt ist.

Im Falle des Einsatzes von Carbonfasern werden bevorzugt Gewebe aus Filamentgarnen mit 200 tex (3K), 400 tex (6K) oder 800tex (12K) eingesetzt, wobei Gewebe aus Filamentgarnen mit 200 tex (3K) besonders bevorzugt sind. Hierbei bedeutet 1K, dass 1000 Einzelfasern zu einem Garn zusammengefasst sind (siehe hierzu auch: http://de.wikipedia.org/wiki/Kohlenstofffaser). Erfindungsgemäß bevorzugt einzusetzende Gewebe auf Basis von Carbonfasern haben ein mittleres Flächengewicht im Bereich von 50-1000 g/m$^2$, besonders bevorzugt im Bereich von 150 bis 300 g/m$^2$.

Im Falle des erfindungsgemäß bevorzugten Einsatzes von Glasfasern werden bei Verwendung von Roving-Glas bevorzugt Gewebe mit einem mittleren Flächengewicht im Bereich von 300 bis 1500 g/m$^2$, besonders bevorzugt im Bereich von 450 bis 1000 g/m$^2$ eingesetzt, während bei Verwendung von Filamentglas bevorzugt Gewebe mit einem mittleren Flächengewicht im Bereich von 50 bis 800 g/m$^2$, besonders bevorzugt im Bereich von 100 bis 500 g/m$^2$ eingesetzt werden. Insbesondere bevorzugt betrifft die vorliegende Erfindung endlosfaserverstärkte Faser-Matrix-Halbzeuge.

In einer besonders bevorzugten Ausführungsform der vorliegenden Erfindung sind die faserförmigen Materialien i) oberflächenmodifiziert, besonders bevorzugt mit einem Haftvermittler bzw. Haftvermittlersystem.

Auch die erfindungsgemäß bevorzugt einzusetzenden Carbonfasern können ohne oder mit Haftvermittler eingesetzt werden. Bevorzugte Haftvermittler basieren hierbei auf Urethan-, Epoxy- oder Acrylat-Systemen.

Im Falle der erfindungsgemäß ganz besonders bevorzugten Glasfasern werden bevorzugt Haftvermittler bzw. Haftvermittlersysteme auf Silanbasis verwendet. Erfindungsgemäß einzusetzende Haftvermittler auf Silanbasis werden in EP 2468810 A1 beschrieben, deren Inhalt hiermit vollumfänglich umfasst wird.

Insbesondere bei Verwendung von Glasfasern werden zusätzlich zu Silanen als Haftvermittler bevorzugt auch Polymerdispersionen, Emulgatoren, Filmbildner (insbesondere Polyepoxid-, Polyether-, Polyolefin-, Polyvinylacetat-, Polyacrylat- oder Polyurethanharze oder Mischungen davon), Verzweiger, weitere Haftvermittler, Gleitmittel, pH-Puffersubstanzen und/oder Glasfaserverarbeitungshilfsmittel (beispielsweise Netzmittel und/oder Antistatika) verwendet. Die weiteren Haftvermittler, Gleitmittel und sonstigen Hilfsstoffe, Verfahren zur Herstellung der Schlichten, Verfahren zur Beschlichtung und Nachbearbeitung der Glasfasern sind dem Fachmann bekannt und beispielsweise in K.L. Löwenstein, "The Manufacturing Technology of Continuous Glass Fibres", Elsevier Scientific Publishing Corp., Amsterdam. London, New York, 1983, beschrieben. Die Glasfasern können über beliebige Methoden beschlichtet werden, bevorzugt mit Hilfe geeigneter Vorrichtungen, insbesondere mit Sprüh- oder Walzenapplikatoren. Auf die mit hoher Geschwindigkeit aus Spinndüsen gezogenen Glasfilamente können sofort nach ihrem Erstarren, d.h. noch vor dem Aufwickeln oder Schneiden, Schlichten aus Haftvermittler bzw. Haftvermittlersystem aufgetragen werden. Es ist aber auch möglich, die Fasern im Anschluss an den Spinnprozess in einem Tauchbad aus Haftvermittler bzw. Haftvermittlersystem zu beschlichten.

Die erfindungsgemäß insbesondere bevorzugt im faserförmigen Material i) einzusetzenden Glasfasern weisen bevorzugt entweder eine kreisförmige Querschnittsfläche und einen mittleren Filament-Durchmesser im Bereich von 6 bis 18 µm, bevorzugt im Bereich von 9 bis 17 µm, oder eine flache Gestalt und nichtkreisförmige Querschnittsfläche, deren Hauptquerschnittsachse eine mittlere Breite im Bereich von 6 bis 40 µm und deren Nebenquerschnittsachse eine

mittlere Breite im Bereich von 3 bis 20 µm besitzt, auf. Die Glasfasern werden bevorzugt aus der Gruppe der E-Glasfasern, A-Glasfasern, C-Glasfasern, D-Glasfasern, S-Glasfasern und / oder R-Glasfasern ausgewählt, wobei E-Glas besonders bevorzugt ist.

Die Fasern werden insbesondere mit einem geeigneten Schlichtesystem bzw. einem Haftvermittler bzw. Haftvermittlersystem auf Silanbasis ausgerüstet.

Besonders bevorzugte Haftvermittler auf Silanbasis für die Vorbehandlung der Glasfasern sind Silanverbindungen der allgemeinen Formel (III)

$$(X\text{-}(CH_2)_q)_k\text{-}Si\text{-}(O\text{-}C_rH_{2r+1})_{4-k} \qquad \text{(III)}$$

in der die Substituenten folgende Bedeutung haben:

X für $NH_2$-, HO- oder

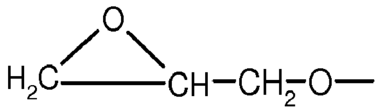

steht,

q für eine ganze Zahl von 2 bis 10, bevorzugt für 3 oder 4 steht,

r für eine ganze Zahl von 1 bis 5, bevorzugt für 1 oder 2 steht und

k für eine ganze Zahl von 1 bis 3, bevorzugt für 1 steht.

Ganz besonders bevorzugte Haftvermittler sind monomere organofunktionelle Silane, insbesondere 3-Aminopropyltrimethoxysilan, Aminobutyltrimethoxysilan, 3-Aminopropyltriethoxysilan, Amino-butyltriethoxysilan, 3-Aminopropyltris-methoxyethoxysilan, 3-Aminopropyl-methyl-diethoxysilan, N-Methyl-2-aminoethyl-3-aminopropyltrimethoxysilan, N-Methyl-2-aminoethyl-3-aminopropyl-methyldimethoxysilan, N-Methyl-3-aminopropyltrimethoxysilan, 3-Glycidyloxypropyl¬trimethoxysilan, 3-Methacryloxypropyltrimethoxysilan, 3-Mercaptopropyltrimethoxysilan, Vinyl-triethoxysilan, Vinyltrimethoxysilan, N-β-(aminoethyl)-γ-aminopropyltrimethoxysilan (Dynasilan Damo von Hüls AG), N-β-(aminoethyl)-γ-amino¬propyltriethoxysilan, N-β-(aminoethyl)-γ-aminopropylmethyldimethoxysilan, N-β-(aminoethyl)-N-β-(aminoethyl)-γ-amino¬propyltri-methoxysilan.

Die Silanverbindungen werden im Allgemeinen in Mengen im Bereich von 0,05 bis 5 Gew.-%, vorzugsweise im Bereich von 0,1 bis 1,5 Gew.-% und insbesondere in Mengen im Bereich von 0,25 bis 1 Gew.-% bezogen auf den Füllstoff zur Oberflaechenbeschichtung eingesetzt.

Erfindungsgemäß bevorzugt liegt der Volumenanteil des faserförmigen Materials i) im Faser-Matrix-Halbzeug im Bereich von 30 bis 60 Vol.-%, besonders bevorzugt im Bereich von 40 bis 55 Vol.-%.

**Komponente ii)**

**Komponente A) Polycarbonat**

Die thermoplastische Matrix ii) enthält als Komponente A) mindestens einen Thermoplasten aus der Gruppe der Polycarbonate. Dies kann auch eine Mischung von Polycarbonaten sein.

Erfindungsgemäß bevorzugt einzusetzende Polycarbonate sind solche Homopolycarbonate und Copolycarbonate auf Basis der Bisphenole der allgemeinen Formel (IV),

$$HO\text{-}Z\text{-}OH \qquad \text{(IV)}$$

worin Z ein divalenter organischen Rest mit 6 bis 30 C-Atomen ist, der eine oder mehrere aromatische Gruppen enthält.

Bevorzugt werden Polycarbonate auf Basis von Bisphenolen der Formel (IVa) eingesetzt

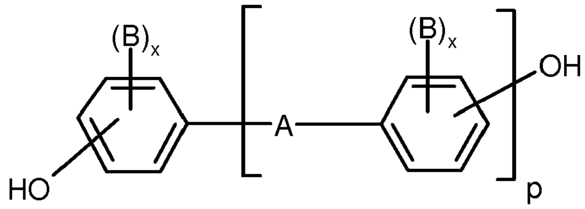

(IVa),

worin

A für eine Einfachbindung oder für einen Rest der Reihe $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen steht, woran weitere aromatische gegebenenfalls Heteroatome enthaltende Ringe kondensiert sein können,

oder A für einen Rest der Formel (V) oder (VI) steht

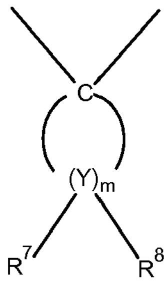

(V)

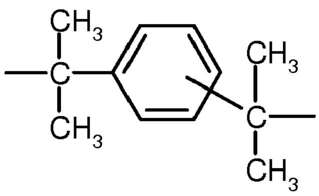

(VI)

$R^7$ und $R^8$ für jedes Y individuell wählbar, unabhängig voneinander für Wasserstoff oder $C_1$-$C_6$-Alkyl, vorzugsweise Wasserstoff, Methyl oder Ethyl, stehen,

B jeweils für $C_1$-$C_{12}$-Alkyl, vorzugsweise Methyl, Halogen, vorzugsweise Chlor und/oder Brom steht,

x jeweils unabhängig voneinander für 0, 1 oder 2 steht,

p für 1 oder 0 steht, und

Y für Kohlenstoff steht,

m eine ganze Zahl von 4 bis 7 steht, bevorzugt für 4 oder 5, mit der Maßgabe, dass an mindestens einem Y (Kohlenstoffatom) $R^7$ und $R^8$ gleichzeitig für Alkyl stehen.

Wenn m für 4 steht, steht Y für $-CR^7R^8-CR^7R^8-CR^7R^8-CR^7R^8-$.

Wenn m für 5 steht, steht Y für $-CR^7R^8-CR^7R^8-CR^7R^8-CR^7R^8-CR^7R^8-$.

Wenn m für 6 steht, steht Y für $-CR^7R^8-CR^7R^8-CR^7R^8-CR^7R^8-CR^7R^8-CR^7R^8-$.

Wenn m für 7 steht, steht Y für $-CR^7R^8-CR^7R^8-CR^7R^8-CR^7R^8-CR^7R^8-CR^7R^8-CR^7R^8-$.

Bevorzugte Bisphenole enthaltend die allgemeine Formel (V) sind Bisphenole aus der Gruppe Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und $\alpha,\alpha'$-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind bevorzugt einzusetzende Bisphenole enthaltend die allgemeinen Formel (V).

Besonders bevorzugte Bisphenole enthaltend die allgemeine Formel (V) sind Hydrochinon, Resorcin, 4,4'-Dihydroxydiphenyl, Bis-(4-hydroxyphenyl)sulfid, Bis-(4-hydroxyphenyl)sulfon, Bis-(3,5-dimethyl-4-hydroxyphenyl)-methan, Bis-(3,5-dimethyl4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, $\alpha,\alpha'$-Bis-(4-hydroxyphenyl)-o-diisopropylbenzol, $\alpha,\alpha'$-Bis-(4-hydroxyphenyl)-m-diisopropylbenzol (d. h. Bisphenol M), $\alpha,\alpha'$-Bis-(4-hydroxyphenyl)-p-diisopropylbenzol und Indanbisphenol.

Die beschriebenen Bisphenole gemäß der allgemeinen Formel (V) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern JP-A 62039 1986, JP-A 62040 1986 und JP-A 105550 1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Auch die als Komponente A) einzusetzenden Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren, oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beispielsweise beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß einzusetzenden Polycarbonate haben bevorzugt ein Gewichtsmittel der molaren Masse ($\underline{M}w$), welches sich z.B. durch Ultrazentrifugation (siehe K. Schilling, Analytische Ultrazentrifugation, Nanolytics GmbH, Dallgow) oder Streulichtmessung gemäß DIN EN ISO 16014-5:2012-10 bestimmen lässt, im Bereich von 10 000 bis 200 000 g/mol. Besonders bevorzugt haben sie ein Gewichtsmittel der molaren Masse im Bereich von 12 000 bis 80 000 g/mol, insbesondere bevorzugt ein Gewichtsmittel der molaren Masse im Bereich von 20 000 bis 35 000 g/mol.

Die mittlere molare Masse der erfindungsgemäß einzusetzenden Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Bevorzugte Kettenabbrecher sind sowohl Monophenole als auch Monocarbonsäuren. Bevorzugte Monophenole sind Phenol, p-Chlorphenol, p-tert.-Butylphenol, Cumylphenol oder 2,4,6-Tribromphenol, sowie langkettige Alkylphenole, insbesondere 4-(1,1,3,3-Tetramethylbutyl)-phenol oder Monoalkylphenole bzw. Dialkylphenole mit insgesamt 8 bis 20 C-Atomen in den Alkylsubstituenten, insbesondere 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Bevorzugte Monocarbonsäuren sind Benzoesäure, Alkylbenzoesäuren oder Halogenbenzoesäuren.

Besonders bevorzugte Kettenabbrecher sind Phenol, p-tert.-Butylphenol, 4-(1,1,3,3-Tetramethylbutyl)-phenol oder Cumylphenol.

Die Menge an einzusetzenden Kettenabbrechern liegt bevorzugt im Bereich von 0,25 bis 10 Mol-%, bezogen auf die Summe der jeweils eingesetzten Bisphenole.

Die erfindungsgemäß als Komponente A) einzusetzenden Polycarbonate können in bekannter Weise verzweigt sein, und zwar vorzugsweise durch den Einbau von trifunktionellen oder mehr als trifunktionellen Verzweigern. Bevorzugte Verzweiger sind solche mit drei oder mehr als drei phenolischen Gruppen oder solche mit drei oder mehr als drei Carbonsäuregruppen.

Besonders bevorzugte Verzweiger sind Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxy-phenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxy-triphenyl)-methylbenzol, 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid oder $\alpha,\alpha',\alpha''$-Tris-(4-hydroxyphenol)-1,3,5-triisopropylbenzol.

Ganz besonders bevorzugte Verzweiger sind 1,1,1-Tris-(4-hydroxyphenyl)-ethan oder 3,3-Bis-(3-methyl-4-hydroxyphenyl)-2-oxo-2,3-dihydroindol.

Die Menge der in einer Ausführungsform einzusetzenden Verzweiger liegt vorzugsweise im Bereich von 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von erfindungsgemäß als Komponente A) einzusetzendem Polycarbonat nach dem Schmelzeumesterungsverfahren sind Ammoniumsalze und Phosphoniumsalze, wie sie beispielsweise in US-A 3442864, JP-A-14742/72, US-A 5399659 oder DE-A 19 539 290 beschrieben werden.

Copolycarbonate können auch als Komponente A) eingesetzt werden. Copolycarbonate im Sinne der Erfindung sind insbesondere Polydiorganosiloxan-Polycarbonat-Blockcopolymere, deren Gewichtsmittel der molaren Masse ($\underline{M}w$) bevorzugt im Bereich von 10 000 bis 200 000 g/mol, besonders bevorzugt im Bereich von 20 000 bis 80 000 g/mol beträgt, ermittelt durch Gelchromatographie gemäß DIN EN ISO 16014-5:2012-10 nach vorheriger Eichung durch Lichtstreuungsmessung oder Ultrazentrifugation. Der Gehalt an aromatischen Carbonatstruktureinheiten in den Polydiorganosiloxan-Polycarbonat-Blockcopolymeren liegt vorzugsweise im Bereich von 75 bis 97,5 Gew.-%, besonders bevorzugt im Bereich von 85 bis 97 Gew.-%. Der Gehalt an Polydiorganosiloxanstruktureinheiten in den Polydiorganosiloxan-Polycarbonat-Blockcopolymeren liegt vorzugsweise im Bereich von 25 bis 2,5 Gew.-%, besonders bevorzugt im Bereich von 15 bis 3 Gew.-%. Die Polydiorganosiloxan-Polycarbonat-Blockcopolymeren können vorzugsweise ausgehend von $\alpha,\omega$-Bishydroxyaryloxyendgruppen-haltigen Polydiorganosiloxanen mit einem mittleren Polymerisationsgrad $P_n$ im Bereich von 5 bis 100, besonders bevorzugt mit einem mittleren Polymerisationsgrad $P_n$ im Bereich von 20 bis 80, hergestellt werden.

Besonders bevorzugt als Komponente A) einzusetzende Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Den als Komponente A) einzusetzenden Polycarbonaten könne übliche Additive, insbesondere Entformungsmittel, in der Schmelze zugemischt oder auf der Oberfläche aufgebracht werden. Bevorzugt enthalten die als Komponente A) einzusetzenden Polycarbonate bereits Entformungsmittel vor der Compoundierung mit den anderen Komponenten der thermoplastischen Matrix ii).

Der Fachmann versteht unter Compoundierung (aus dem Englischen: *Compound* = "Mischung") einen Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern, besonders bevorzugt in gleichläufigen Doppelschneckenextrudern, gegenläufigen Doppelschneckenextrudern, Planetwalzenextrudern oder Ko-Knetern und umfasst die Verfahrensoperationen Fördern, Aufschmelzen, Dispergieren, Mischen, Entgasen und Druckaufbau.

**Komponente B)**

Die thermoplastische Matrix ii) enthält als Komponente B) erfindungsgemäß ein oder mehrere **organische Phosphazene** der Formel (I) und/oder eines oder mehrere Phosphazene der Formel (II). Die Phosphazene und deren Herstellung sind z.B in EP-A 728 811, DE-A 1961668 und WO97/40092 beschrieben.

Bevorzugt stehen $R^1$, $R^2$, $R^3$, $R^4$ für Aryl und/oder Alkylaryl. Als Aryl-Gruppen werden dabei bevorzugt solche mit 6-20 Kohlenstoffatomen, insbesondere Phenyl, Methylphenyl, Dimethylphenyl, Trimethylphenyl und/oder Naphtyl eingesetzt. Dabei sind Aryle mit 6-10 Kohlenstoffatomen ganz besonders bevorzugt, wobei Phenyl insbesondere ganz besonders bevorzugt ist. Als Alkylaryl-Gruppen werden bevorzugt solche mit 6-20 Kohlenstoffatomen eingesetzt, wobei Benzyl, Phenylethyl und Phenylpropyl besonders bevorzugt und Benzyl ganz besonders bevorzugt ist.

Erfindungsgemäß werden ringförmige Phosphazene der Formel (I) und/oder kettenförmige Phosphazene der Formel (II) eingesetzt. Unter den ringförmigen erfindungsgemäß einzusetzenden Phosphazenen der Formel (I) werden bevorzugt solche eingesetzt, bei denen a in Formel (I) für eine ganze Zahl im Bereich von 3 bis 8, besonders bevorzugt für eine ganze Zahl im Bereich von 3 bis 5 steht.

Von den kettenförmigen erfindungsgemäß einzusetzenden Phosphazenen der Formel (II) werden bevorzugt solche eingesetzt, bei denen b für eine ganze Zahl im Bereich von 3 bis 1000, besonders bevorzugt im Bereich von 3 bis 100, ganz besonders bevorzugt im Bereich von 3 bis 25 steht.

Insbesondere ganz besonders bevorzugt werden erfindungsgemäß als Komponente B) ringförmige Phenoxyphosphazene eingesetzt, wie sie z.B. von der Fa. Fushimi Pharmaceutical Co. Ltd, Kagawa, Japan unter der Bezeichnung Rabitle® FP110 [CAS-Nr. 1203646-63-2] erhältlich sind, oder wenn a = 3, dann 2,2,4,4,6,6-Hexahydro-2,2,4,4,6,6-hexaphenoxytriazatriphosphorine [CAS Nr. 1184-10-7].

**Komponente C)**

In einer bevorzugten Ausführungsform wird zusätzlich zu den Komponenten A) und B) noch Komponente C) 0,001 bis 2 Gew.-%, bevorzugt 0,01 bis 1 Gew.-%, besonders bevorzugt 0,02 bis 0,5 Gew.-% wenigstens eines Thermostabilisators aus der Gruppe der aliphatisch oder aromatisch **substituierten Phosphite** eingesetzt, wobei wenigstens eine der Komponenten A) oder B) im Rahmen der angegebenen Mengenbereiche so zu variieren ist, dass die Summe aller Gewichtsprozente der Komponenten A), B) und C) bezogen auf die thermoplastische Matrix ii) stets 100 ergibt.

Bevorzugt ist das Molekulargewicht des als Komponente C) einzusetzenden Thermostabilisators größer als 650 g/mol. Unter den aliphatisch substituierten Phosphiten werden dabei im Rahmen der vorliegenden Erfindung solche verstanden und bevorzugt, die einen Strukturbaustein der Formel (VII) enthalten, wobei $R^9$ für substituierte Aryl-Reste steht, die gleich oder verschieden voneinander sein können.

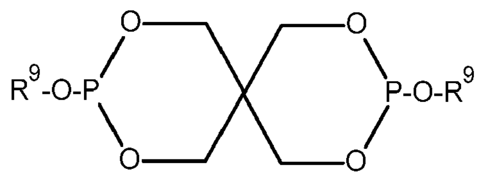

(VII)

Besonders bevorzugt einzusetzendes aliphatisch substituiertes Phosphit ist Bis(2,4-dicumylphenyl)-pentaerythritol-diphosphit [CAS Nr. 154862-43-8], das z.B. von der Fa. Dover Chemical Corp., Dover, USA unter dem Handelsnamen Doverphos® S9228 angeboten wird.

Unter den ausschließlich aromatisch substituierten Phosphiten wird erfindungsgemäß besonders bevorzugt Tetrakis(2,4-di-tert-butylphenyl)-1,1-biphenyl-4,4'-diylbisphosphonit [CAS Nr. 38613-77-3] eingesetzt, das z.B. als Hostanox® P-EPQ von der Fa. Clariant International Ltd., Muttenz, Schweiz bezogen werden kann.

**Komponente D)**

In einer weiteren bevorzugten Ausführungsform enthält die thermoplastische Matrix ii) zusätzlich zu den Komponenten A) bis C) oder anstelle von C) noch D) 0,001 bis 3 Gew.-%, bevorzugt 0,01 bis 1 Gew.-%, ganz besonders bevorzugt 0,02 bis 0,5 Gew.-% wenigstens eines Thermostabilisators ausgewählt aus der Gruppe der sterisch gehinderten Phenole, wobei es sich um Verbindungen mit phenolischer Struktur handelt, die am phenolischen Ring mindestens eine sterisch anspruchsvolle Gruppe aufweisen und wobei die Summe aller Gewichtsprozente der Komponenten A), B), C), D) oder A), B), D) bezogen auf die thermoplastische Matrix ii) stets 100 ergibt.

Bevorzugte sterisch gehinderte Phenole sind Verbindungen mit mindestens einem Molekülbaustein der Formel (IX),

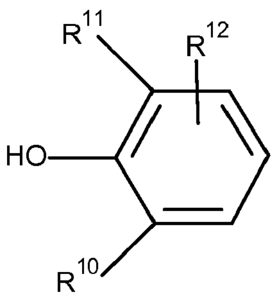

(IX)

worin $R^{10}$ und $R^{11}$ für eine Alkylgruppe, für eine substituierte Alkylgruppe oder für eine substituierte Triazolgruppe stehen, wobei die Reste $R^{10}$ und $R^{11}$ gleich oder verschieden sein können und $R^{12}$ für eine Alkylgruppe, für eine substituierte Alkylgruppe oder für eine gegebenenfalls substituierte Alkoxygruppe steht.

Sterische Hinderung bezeichnet in der organischen Chemie den Einfluss der räumlichen Ausdehnung eines Moleküls auf den Verlauf der Reaktion. Der Begriff beschreibt die Tatsache, dass manche Reaktionen nur sehr langsam oder gar nicht ablaufen, wenn sich in der Umgebung der reagierenden Atome große und raumerfüllende Gruppen befinden. Ein bekanntes Beispiel für den Einfluss der sterischen Hinderung ist die Umsetzung von Ketonen in einer Grignard-Reaktion. Wird Di-*tert*-butylketon bei der Reaktion eingesetzt, ist die Reaktion aufgrund der sehr raumerfüllenden *tert*-butyl-Gruppen so stark verlangsamt, dass maximal eine Methylgruppe eingeführt werden kann, noch größere Reste reagieren überhaupt nicht mehr.

Eine Gruppe besonders bevorzugt einzusetzender sterisch gehinderter Phenole leitet sich von substituierten Benzolcarbonsäuren ab, insbesondere von substituierten Benzolpropionsäuren. Besonders bevorzugte Verbindungen aus dieser Klasse sind Verbindungen der Formel (X)

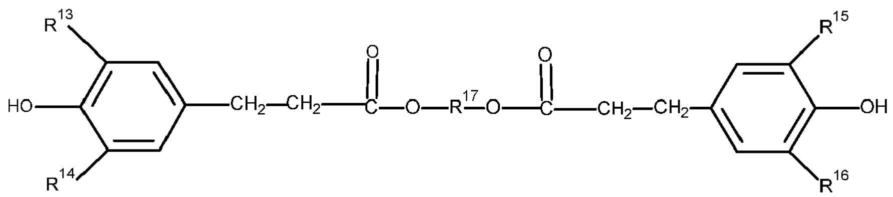

(X)

worin $R^{13}$, $R^{14}$, $R^{15}$ und $R^{16}$ unabhängig voneinander $C_1$-$C_8$-Alkylgruppen darstellen, die ihrerseits substituiert sein können (mindestens eine davon ist eine sterisch anspruchsvolle Gruppe) und $R^{17}$ einen zweiwertigen aliphatischen Rest mit 1 bis 15 C-Atomen bedeutet, der in der Hauptkette auch C-O-Bindungen und Verzweigungen aufweisen kann. Bevorzugte Ausführungen für Verbindungen der Formel (X) sind Verbindungen der Formeln (XI), (XII) und (XIII).

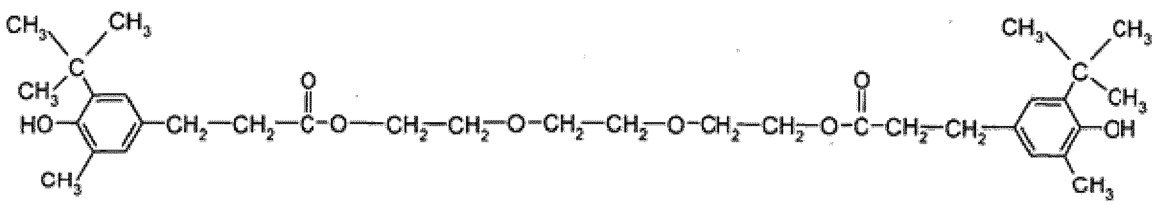

(XI)

Formel (XI) ist das Irganox® 245 der Firma BASF SE, [CAS Nr. 36443-68-2] mit der Bezeichnung Triethylene glycol bis(3-tert-butyl-4-hydroxy-5-methylphenyl)propionate.

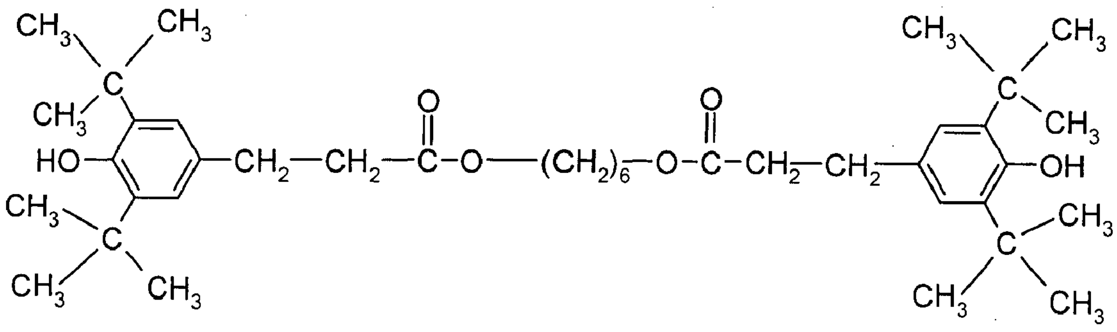

(XII)

Formel (XII) ist das Irganox® 259 der Firma BASF SE, [CAS Nr. 35074-77-2] mit der Bezeichnung 1,6-Hexamethylene bis (3,5-di-(tert)-butyl-4-hydroxyhydrocinnamate.

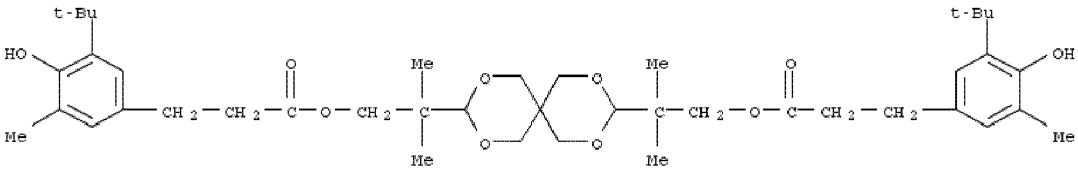

(XIII)

Formel (XIII) ist der ADK Stabilisator AO 80 der Adeka Palmerole SAS, [CAS Nr. 90498-90-1] mit der Bezeichnung 3,9-bis(2-(3-(3-tert.-butyl-4-hydroxy-5-methylphenyl)propionyloxy-1,1-dimethyl)-2,4,8,10-tetraoxaspiro[5,5]undekan.

Ganz besonders bevorzugte als Komponente D) einzusetzende Thermostabilisatoren sind solche, die ein Molekulargewicht oberhalb von 600 g/mol aufweisen. Diese werden insbesondere ganz bevorzugt ausgewählt aus der Gruppe 1,6-Hexandiol-bis[3-(3,5-di-tert.-butyl-4-hydroxyphenyl)-propionat] [CAS-Nr. 35074-77-2] (Irganox® 259), Pentaerythril-tetrakis-[3-(3,5-di-tert.-butyl-4-hydroxyphenyl)-propionat] [CAS-Nr. 6683-19-8] (Irganox® 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxaspiro[5.5] undecane [CAS-Nr. 90498-90-1] (ADK Stab® AO 80), wobei letzteres insbesondere ganz besonders bevorzugt ist. ADK Stab® AO 80 ist ein Handelsprodukt der Fa. Adeka-Palmerole SAS, Mulhouse, Frankreich.

**Komponente E)**

In einer weiteren bevorzugten Ausführungsform enthält die thermoplastische Matrix ii) zusätzlich zu den Komponenten A) bis D) oder anstelle von C) und/oder D) noch E) 0,01 bis 5 Gew.-%, bevorzugt 0,05 bis 1 Gew. %, ganz besonders bevorzugt 0,1 bis 0,6 Gew.-% mindestens eines **Gleit- und Entformungsmittel** ausgewählt aus der Reihe der langkettigen Fettsäuren, der Salze langkettiger Fettsäuren, der Esterderivate langkettiger Fettsäuren, Montanwachse sowie niedermolekulare Polyethylen bzw. Polypropylenwachse, wobei die Summe aller Gewichtsprozente der Komponenten A), B), C), D), E) oder A), B), D), E) oder A), B), C), E) oder A), B), E) bezogen auf die thermoplastische Matrix ii) stets 100 ergibt.

Bevorzugte langkettige Fettsäuren sind Stearinsäure oder Behensäure. Bevorzugte Salze der langkettigen Fettsäuren sind Ca- oder Zn-Stearat. Bevorzugtes Esterderivat langkettiger Fettsäuren ist Pentaerythritoltetrastearat.

Montanwachse im Sinne der vorliegenden Erfindung sind Mischungen aus geradkettigen, gesättigten Carbonsäuren mit Kettenlängen von 28 bis 32 C Atomen. Erfindungsgemäß besonders bevorzugt werden Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Pentaerythritoltetrastearat, Calciumstearat [CAS Nr. 1592-23-0] und/oder Ethylenglycoldimontanat, hier insbesondere Licowax® E [CAS-Nr. 74388-22-0] der Fa. Clariant, Muttenz, Basel ganz besonders bevorzugt ist und Pentaerythritoltetrastearat [CAS-Nr. 115-83-3] z.B. erhältlich als Loxiol® P861 der Fa. Emery Oleochemicals GmbH, Düsseldorf, Deutschland insbesondere ganz besonders bevorzugt ist.

**Komponente F)**

In einer weiteren bevorzugten Ausführungsform enthält die thermoplastische Matrix ii) zusätzlich zu den Komponenten A) bis E) oder anstelle von C) und/oder D) und/oder E) noch F) 0,01 bis 75 Gew.-%, bevorzugt 0,1 bis 50 Gew.-%, ganz besonders bevorzugt 0,2 bis 25 Gew.-%, jeweils bezogen auf die Gesamtzusammensetzung der thermoplastischen Matrix ii), wenigstens eines **weiteren Additivs,** das unterschiedlich zu den Komponenten B), C), D) und E) ist, wobei die Summe aller Gewichtsprozente der Komponenten A), B), C), D), E), F) oder A), B), D), E), F) oder A), B), C), E), F) oder A), B), C), D), F) oder A), B), E), F) oder A), B), C), F) oder A), B), D), F) oder A), B), E), F) oder A), B), F) bezogen auf die thermoplastische Matrix ii) stets 100 ergibt.

Im Falle des Einsatzes der Komponente F) kann dies gegebenenfalls Auswirkungen auf das Kriterium der Transparenz des Faser-Matrix-Halbzeugs und somit auf die daraus herzustellenden Erzeugnisse haben. Der Einsatz der Komponente F) kommt deshalb für den Fachmann nur unter Berücksichtigung dieser Auswirkungen infrage, insbesondere wenn statt der Transparenz andere Kriterien - wie der Flammschutz allein - im Hinblick auf die aus den erfindungsgemäßen Faser-Matrix-Halbzeugen herzustellenden Erzeugnisse im Vordergrund stehen.

Unter dieser Voraussetzung sind bevorzugte weitere Additive im Sinne der vorliegenden Erfindung UV-Stabilistoren, weitere halogenfreie Flammschutzmittel, weitere von Komponente E) verschiedene Gleit- und Entformungsmittel, weitere von Komponente C) und D) verschiedene Thermostabilisatoren, außerdem Füll- und Verstärkungsstoffe, Laserabsorber, di- oder mehrfunktionelle verzweigend oder kettenverlängernd wirkende Additive, Gammastrahlenstabilisatoren, Hydrolysestabilisatoren, Säurefänger, Antistatika, Emulgatoren, Weichmacher, Verarbeitungshilfsmittel, Fließhilfsmittel, Elastomermodifikatoren und Farbmittel. Die Additive können jeweils alleine oder in Mischung bzw. in Form von Masterbatchen eingesetzt werden.

Als **UV-Stabilisatoren** werden bevorzugt substituierte Resorcine, Salicylate, Benzotriazole, Triazin-Derivate oder Benzophenone eingesetzt.

Als **Farbmittel** werden bevorzugt organische Pigmente, bevorzugt Phthalocyanine, Chinacridone, Perylene sowie Farbstoffe, bevorzugt Nigrosin oder Anthrachinone, weiterhin anorganische Pigmente, insbesondere Titandioxid, Ultramarinblau, Eisenoxid, Zinksulfid oder Ruß eingesetzt werden. Für das erfindungsgemäß als Pigment bevorzugt einzusetzende **Titandioxid** kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einem Sauerstoffüberschuss in der Gasphase bei der Oxidation des Titantetrachlorids zu Titandioxid von mindestens 2 %; beim SP-Grundkörper durch eine Dotierung z. B. mit Al, Sb, Nb oder Zn. Besonders bevorzugt, um eine hinreichend hohe Helligkeit der aus den erfindungsgemäßen Zusammensetzungen herzustellenden Erzeugnisse zu erhalten, ist eine "leichte" Stabilisierung mit Al bevorzugt, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und / oder Al und / oder Zr und / oder durch den Einsatz von Sn-Verbindungen.

Bevorzugt ist die Oberfläche von pigmentärem Titandioxid mit amorphen Auffällungen von Oxidhydraten der Verbindungen $SiO_2$ und / oder $Al_2O_3$ und / oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß bevorzugt als Komponente F) einzusetzendes Titandioxid [CAS Nr. 13463-67-7] weist bevorzugt eine mittlere Teilchengröße d50 im Bereich von 90 nm bis 2000 nm, bevorzugt im Bereich von 200 nm bis 800 nm auf. Die mittlere Teilchengröße d50 ist der aus der Teilchengrößenverteilung ermittelte Wert, zu dem 50 Gew.-% der Teilchen einen äquivalenten Kugeldurchmesser kleiner als diesen d50 Wert aufweisen. Die zugrunde liegende Norm ist ISO 13317-3.

Die Angaben der Teilchengrößenverteilung bzw. der Teilchengrößen im Rahmen der vorliegenden Erfindung beziehen sich auf sogenannte oberflächenbasierte Teilchengrößen, jeweils vor Einarbeitung in die thermoplastische Formmasse. Die Teilchengrößenbestimmung erfolgt erfindungsgemäß durch Laserdiffraktometrie, siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16.

Kommerziell erhältliches Titandioxid sind beispielsweise Kronos® 2230, Kronos® 2233, Kronos® 2225 und Kronos® vlp7000 der Fa. Kronos, Dallas, USA.

Als **Säurefänger** werden bevorzugt Hydrotalcit, Kreide, Böhmit oder Zinkstannate eingesetzt.

Bevorzugte **Füll- und Verstärkungsstoffe** verschieden von den erfindungsgemäßen faserförmigen Materialien i) werden ausgewählt aus der Gruppe, Glimmer, Silikat, Quarz, Wollastonit, Kaolin, amorphe Kieselsäuren, nanoskalige Mineralien, insbesondere Montmorillonite oder Nano-Böhmit, Magnesiumcarbonat, Kreide, Feldspat, Bariumsulfat, Glaskugeln, Mahlglas und/oder faserförmige Füllstoffe und/oder Verstärkungsstoffe auf der Basis von Kohlenstofffasern und/oder Glasfasern. Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide, Feldspat, Bariumsulfat und/oder Glasfasern eingesetzt. Besonders bevorzugt werden erfindungsgemäß mineralische teilchenförmige Füllstoffe auf der Basis von Wollastonit, Kaolin und/oder Glasfasern eingesetzt.

Bevorzugt können ferner auch nadelförmige mineralische Füllstoffe eingesetzt werden. Unter nadelförmigen mineralischen Füllstoffen wird erfindungsgemäß ein mineralischer Füllstoff mit stark ausgeprägtem nadelförmigen Charakter verstanden. Insbesondere seien nadelförmige Wollastonite genannt.

Bevorzugt weist der als Komponente F) einzusetzende mineralische Füllstoff ein Länge : Durchmesser - Verhältnis im Bereich von 2:1 bis 35:1, besonders bevorzugt im Bereich von 3:1 bis 19:1, am meisten bevorzugt im Bereich von 4:1 bis 12:1 auf. Die mittlere Teilchengröße der erfindungsgemäß einzusetzenden nadelförmigen mineralischen Füllstoffe liegt bevorzugt bei kleiner 20 $\mu$m, besonders bevorzugt bei kleiner 15 $\mu$m, insbesondere bevorzugt bei kleiner 10 $\mu$m bestimmt mit einem CILAS GRANULOMETER.

Der als Komponente F) einzusetzende Füllstoff und/oder Verstärkungsstoff kann in einer Ausführungsform oberflächenmodifiziert sein, bevorzugt mit einem Haftvermittler bzw. Haftvermittlersystem, insbesondere auf Silanbasis (siehe oben). Die Vorbehandlung in Form einer Oberflächenmodifizierung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt als Füllstoff der Komponente F) einzusetzenden Glasfasern, die im allgemeinen einen mittleren Faserdurchmesser im Bereich von 7 bis 18 $\mu$m, bevorzugt im Bereich von 9 bis 15 $\mu$m haben, werden als geschnittene oder gemahlene Glasfasern zugesetzt. Bevorzugt sind die Glasfasern mit einem geeigneten Schlichtesystem auf Silanbasis (siehe oben) ausgerüstet. Zur Bestimmung des mittleren Faserdurchmessers siehe oben.

Die als Komponente F) einzusetzenden Füllstoffe können verarbeitungsbedingt in der thermoplastischen Matrix ii) einen kleineren d97- bzw. d50-Wert aufweisen, als in der ursprünglich eingesetzten Form. Insbesondere die Glasfasern können verarbeitungsbedingt in der thermoplastischen Matrix ii) kürzere Längenverteilungen als ursprünglich eingesetzt aufweisen.

Die Füll- und Verstärkungsstoffe können einzeln oder als Mischung aus zwei oder mehr unterschiedlichen Füllstoffen und/oder Verstärkungsstoffen eingesetzt werden.

Bevorzugt kann die erfindungsgemäße thermoplastische Matrix ii) als Komponente F) di-**oder mehrfunktionelle verzweigend oder kettenverlängernd wirkende Additive,** enthaltend mindestens zwei und höchstens 15 verzweigend oder kettenverlängernd wirkende funktionelle Gruppen pro Molekül, enthalten. Als verzweigend bzw. kettenverlängende Additive kommen niedermolekulare oder oligomere Verbindungen in Frage, die über mindestens zwei und höchstens 15 verzweigend oder kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei und höchstens 15 Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8].

Zur Verzweigung/Kettenverlängerung sind zudem besonders bevorzugt geeignet:

1. Poly- bzw. Oligoglycidyl- oder Poly-(ß-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und

anschließender Alkalibehandlung.
Poly- bzw. Oligoglycidyl- oder Poly-(ß-methylglycidyl)-ether leiten sich bevorzugt ab von acyclischen Alkoholen, insbesondere Ethylenglykol, Diethylenglykol und höhereren Poly-(oxyethylen)-glykolen, Propan-1,2-diol, Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit sowie von Polyepichlorhydrinen.
Sie leiten sich aber auch bevorzugt ab von cycloaliphatischen Alkoholen, insbesondere 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne, insbesondere N,N-Bis-(2-hydroxyelhyl)anilin oder p,p'-Bis-(2-hydroxyethyl-amino)-diphenylmethan.
Die Epoxidverbindungen können sich bevorzugt auch von einkernigen Phenolen ableiten, insbesondere von Resorcin oder Hydrochinon, oder sie basieren auf mehrkernigen Phenolen, insbesondere auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Forrnaldehyd, insbesondere Phenol-Novolake.

2. Poly- bzw. Oligo-(N-glycidyl)-Verbindungen ferner erhältlich durch Dehydrochlorierung der Reaktionsprodukte von Epichlorhydrin mit Aminen, die mindestens zwei Aminowasserstoffatome enthalten. Bei diesen Aminen handelt es sich bevorzugt um Anilin, Toluidin, n-Butylamin, Bis-(4-aminophenyl)methan, m-Xylylendiamin oder Bis-(4-methylaminophenyl)-methan, aber auch N,N,O-Triglycidyl-m-aminophenyl oder N,N,O-Triglycidyl-p-aminophenol.
Zu den Poly-(N-glycidyl)-Verbindungen zählen aber auch bevorzugt N,N'-Diglycidylderivate von Cycloalkylenharnstoffen, besonders bevorzugt Ethylenharnstoff oder 1,3-Propylenharnstoff, und N,N'-Diglycidylderivate von Hydantoinen, insbesondere 5,5-Dimethylhydantoin.

3. Poly- bzw. Oligo-(S-glycidyl)-Verbindungen, insbesondere Di-S-glycidylderivate, die sich von Dithiolen, bevorzugt Ethan-1,2-dithiol oder Bis-(4-mercaptomethylphenyl)-ether, ableiten.

4. Epoxidierte Fettsäureester des Glycerins, insbesondere epoxidierte Pflanzenöle. Sie werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen, und organischen Peroxycarbonsäuren (Prileschajew-Reaktion) erfolgen. Verfahren zur Herstellung von epoxidierten Pflanzenölen sind zum Beispiel in Smith, March, March's Advanced Organic Chemistry (5. Auflage, Wiley-Interscience, New York, 2001) beschrieben. Bevorzugte epoxidierte Fettsäureester des Glycerins sind Pflanzenöle. Erfindungsgemäß besonders bevorzugter epoxidierter Fettsäureester des Glycerins ist epoxidiertes Sojaöl [CAS No. 8013-07-8].

Bevorzugt als Komponente F) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente F) einzusetzende **Fließhilfsmittel** sind Copolymerisate aus mindestens einem α-Olefin mit mindestens einem Methacrylsäurester oder Acrylsäureester eines aliphatischen Alkohols. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Ganz besonders bevorzugt ist Acrylsäure-(2-ethyl)-hexylester. Als Fließhilfsmittel erfindungsgemäß geeignete Copolymerisate zeichnen sich neben der Zusammensetzung auch durch das niedrige Molekulargewicht aus. Dementsprechend sind vor allem Copolymerisate bevorzugt, die einen MFI-Wert gemessen bei 190°C und einer Belastung von 2,16 kg von mindestens 100g/10min, bevorzugt von mindestens 150g/10min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt.

Bevorzugt als Komponente F) einzusetzende **Elastomermodifikatoren** umfassen u.a. ein oder mehrere Pfropfpolymerisate von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt <-20°C.

Die Pfropfgrundlage E.2 hat im allgemeinen eine mittlere Teilchengröße (d50-Wert) im Bereich von 0,05 bis 10 $\mu$m, vorzugsweise im Bereich von 0,1 bis 5 $\mu$m, besonders bevorzugt im Bereich von 0,2 bis 1 $\mu$m.
Monomere E.1 sind vorzugsweise Gemische aus

E.1.1 50 bis 99 Gew.-% Vinylaromaten und/oder kernsubstituierten Vinylaromaten, insbesondere Styrol, $\alpha$-Methylstyrol, p-Methylstyrol, p-Chlorstyrol, und/oder Methacrylsäure-($C_1$-$C_8$)-Alkylester, insbesondere Methylmethacrylat, Ethylmethacrylat) und

E.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-Alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid).

Bevorzugte Monomere E.1.1 sind ausgewählt aus mindestens einem der Monomere Styrol, $\alpha$-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat.
Besonders bevorzugte Monomere sind E.1.1 Styrol und E.1.2 Acrylnitril.
Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.
Bevorzugte Pfropfgrundlagen E.2 sind Dienkautschuke, insbesondere auf Basis Butadien, Isopren etc oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10 °C, vorzugsweise bei <0 °C, besonders bevorzugt bei <-10 °C liegt.
Besonders bevorzugte Propfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt bevorzugt mindestens 30 Gew.-%, besonders bevorzugt mindestens 40 Gew.-% (in Toluol gemessen).
Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.
Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.
Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.
Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, vorzugsweise Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland Michigan, USA, besonders bevorzugt.
Weitere bevorzugt geeignete Pfropfgrundlagen gemäß E.2 sind Silikonkautschuke mit pfropfaktiven Stellen, wie sie in DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.
Bevorzugte Propfpolymerisate mit einem Silikonanteil sind solche, die Methylmethacrylat oder Styrol-Acrylnitril als Schale und ein Silikon/Acrylat-Propf als Kern aufweisen. Unten solchen mit Styrol-Acrylnitril als Schale kann z.B. Metablen® SRK200 eingesetzt werden. Unter solchen mit Methylmethacrylat als Schale können z.B. Metablen® S2001, Metablen® S2030 und/oder Metablen® SX-005 eingesetzt werden. Besonders bevorzugt wird Metablen® S2001 eingesetzt. Die Produkte mit dem Handelsnamen Metablen® sind erhältlich bei Mitsubishi Rayon Co., Ltd., Tokio, Japan.
Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10 °C, vorzugsweise < 0 °C, besonders bevorzugt < -20 °C aufweisen. Bevorzugt gehören hierzu Elastomere mit einer Blockcopolymerstruktur sowie weiterhin thermoplastisch aufschmelzbare Elastomere , insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Bevorzugt als Komponente F) einzusetzende und von Komponente B) unterschiedliche Flammschutzmittel sind phosphorhaltige Flammschutzmittel ausgewählt aus den Gruppen der mono- und oligomeren Phosphor- und Phosphonsäureester, Phosphonate, Phosphite verschieden von Komponete C), Hypophosphite, und Phosphinoxide.

Auch andere hier nicht speziell erwähnte Flammschutzmittel oder Flammschutzmittelsynergisten können als Komponente F) zum Einsatz kommen. Hierzu zählen auch rein anorganische Phosphorverbindungen, insbesondere roter Phosphor oder Borphosphathydrat. Ferner können auch mineralische Flammschutzadditive oder Salze aliphatischer und aromatischer Sulfonsäuren, insbesondere Metallsalze der 1-Perfluorbutansulfonsäure, bevorzugt Natriumperfluoro-1-butansulfonat und/oder Kaliumperfluoro-1-butansulfonat, besonders bevorzugt Kaliumperfluoro-1-butansulfonat [CAS-Nr. 29420-49-3] (z.B. Bayowet® C4 der Fa. Lanxess Deutschland GmbH, Köln) eingesetzt werden. In Frage kommen, ferner Flammschutzmittelsynergisten aus der Gruppe der sauerstoff-, stickstoff- oder schwefelhaltigen Metallverbindungen, bevorzugt Zinkoxid, Zinkstannat, Zinkhydroxystannat, Zinksulfid, Molybdänoxid, sofern nicht bereits als Farbmittel eingesetzt Titandioxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen.

Weitere bevorzugt geeignete Flammschutzadditive sind Kohlebildner, besonders bevorzugt Poly-(2,6-diphenyl-1,4-phenyl)ether, insbesondere Poly(2,6-dimethyl-1,4-phenylen)ether [CAS Nr. 25134-01-4], Phenol-Formaldehydharze, Polycarbonate, Polyimide, Polysulfone, Polyethersulfone oder Polyetherketone, sowie Antitropfmittel, insbesondere Tetrafluorethylenpolymerisate. Die Tetrafluorethylenpolymerisate können in Reinform oder aber in Kombination mit anderen Harzen, bevorzugt Styrolacrylnitril (SAN), oder Acrylaten, vorzugsweise Methylmethacrylat bzw. Butylacrylat, eingesetzt werden. Ein insbesondere bevorzugt geeignetes Beispiel für Tetrafluorethylen-Styrolacrylnitril-Harze ist z.B. Cycolac° INP 449 [CAS-Nr. 1427364-85-9] der Fa. Sabic Corp., Riad, Saudi Arabien; ein insbesondere bevorzugt geeignetes Beispiel für Tetrafluorethylen-AcrylatHarze ist z.B. Metablen A3800 [CAS-Nr. 639808-21-2] der Fa. Mitsubishi Rayon Co., Ltd., Tokio, Japan. Antitropfmittel enthaltend Tetrafluorethylenpolymerisate werden erfindungsgemäß als Komponente F) bevorzugt in Mengen von 0,01 bis 1 Gew-%, besonders bevorzugt von 0,1 bis 0,6 Gew-% eingesetzt.

Die als Komponente F) zusätzlich einzusetzenden Flammschutzmittel können in Reinform, sowie über Masterbatche oder Kompaktate dem Polycarbonat bei der Herstellung der thermoplastischen Matrix ii) zugesetzt werden.

Weitere **Thermostabilisatoren** verschieden von Komponente B) und C) sind ausgewählt aus der Gruppe der schwefelhaltigen Stabilisatoren, insbesondere Sulfide, Dialkylthiocarbamaten oder Thiodipropionsäuren., außerdem solche ausgewählt aus der Gruppe der Gruppe der Kupfersalze, insbesondere Kupfer(I)iodid, die bzw. das bevorzugt in Kombination mit Kaliumiodid und/oder Natriumhypophosphit $NaH_2PO_2$ eingesetzt werden bzw. wird, ferner sterisch gehinderte Amine, insbesondere Tetrametyhlpiperidin-Derivate, aromatische sekundäre Amine, insbesondere Diphenylamine, Hydrochinone, substituierte Resorcine, Salicylate, Benzotriazole und Benzophenone, sowie verschieden substituierte Vertreter dieser Gruppen.

Bevorzugt sind Faser-Matrix-Halbzeuge enthaltend

i) mindestens ein faserförmiges Material, ausgewählt aus der Gruppe der Gelege, Gewebe, Geflechte, Gestricke, Vliese, Rovings, Matten, Gesticke und Kombinationen daraus, aus Glasfasern, Carbonfasern, Mineralfasern, Naturfasern, Kunststofffasern und/oder Kombinationen daraus, und
eine thermoplastische Matrix ii) enthaltend

A) 60 bis 96,999 Gew-% Polycarbonat,

B) 3 bis 38 Gew.-% eines oder mehrerer Phosphazene der Formel (I) und/oder eines oder mehrerer Phosphazene der Formel (II),

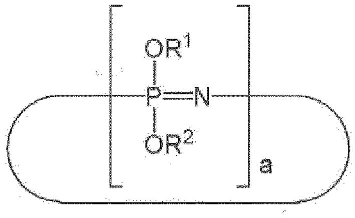

(I)

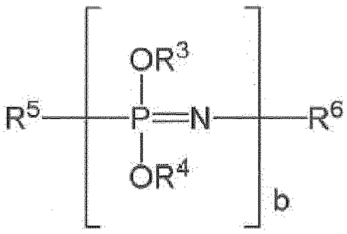

(II)

worin
$R^1$, $R^2$, $R^3$, $R^4$, $R^5$, $R^6$, a und b die oben angegebenen Bedeutungen haben und

C) 0,001 bis 2 Gew.-% eines Thermostabilisators aus der Gruppe der aliphatisch oder aromatisch substituierten Phosphite, bevorzugt mit einem Molekulargewicht größer als 650 g/mol, wobei die Summe der Gewichtsprozente in der thermoplastischen Matrix ii) stets 100 ergibt und wobei das faserförmige Material i) mit der thermoplastischen Matrix ii) imprägniert ist und der Volumenanteil des faserförmigen Materials i) im Faser-Matrix-Halbzeug im Bereich von 25 bis 65 Vol.-% liegt.

Weiterhin bevorzugt sind Faser-Matrix-Halbzeuge enthaltend

i) mindestens ein faserförmiges Material, ausgewählt aus der Gruppe der Gelege, Gewebe, Geflechte, Gestricke, Vliese, Rovings, Matten, Gesticke und Kombinationen daraus, aus Glasfasern, Carbonfasern, Mineralfasern, Naturfasern, Kunststofffasern und/oder Kombinationen daraus, und
eine thermoplastische Matrix ii) enthaltend

A) 60 bis 96,999 Gew.-% Polycarbonat
B) 3 bis 37 Gew.-% eines oder mehrerer organischer Phosphazene der Formel (I) und/oder eines oder mehrerer Phosphazene der Formel (II),

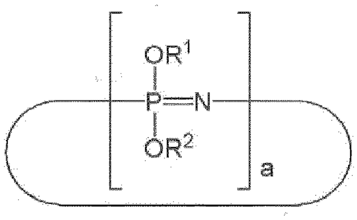

(I)

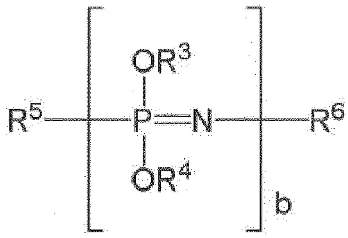

(II)

worin
$R^1$, $R^2$, $R^3$, $R^4$ $R^5$, $R^6$, a und b die oben angegebenen Bedeutungen haben und
D) 0,001 bis 3 Gew.-% wenigstens eines Thermostabilisators ausgewählt aus der Gruppe der sterisch gehinderten Phenole, bevorzugt mit einem Molekulargewicht größer als 600 g/mol, wobei die Summe der Gewichtsprozente in der thermoplastischen Matrix ii) stets 100 ergibt und wobei das faserförmige Material i) mit der thermoplastischen Matrix ii) imprägniert ist und der Volumenanteil des faserförmigen Materials i) im Faser-Matrix-Halbzeug im Bereich von 25 bis 65 Vol.-% liegt.

Besonders bevorzugt sind Faser-Matrix-Halbzeuge enthaltend

i) mindestens ein faserförmiges Material, ausgewählt aus der Gruppe der Gelege, Gewebe, Geflechte, Gestricke, Vliese, Rovings, Matten, Gesticke und Kombinationen daraus, aus Glasfasern, Carbonfasern, Mineralfasern, Naturfasern, Kunststofffasern und/oder Kombinationen daraus, und
eine thermoplastische Matrix ii) enthaltend

A) 60 bis 96,999 Gew.-% Polycarbonat

B) 3 bis 38 Gew.-% eines oder mehrerer Phosphazene der Formel (I),

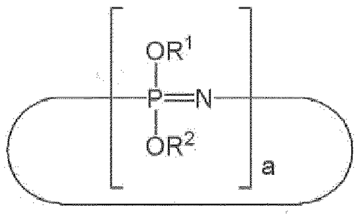

(I)

worin $R^1$, $R^2$ für Phenyl stehen und a für eine ganze Zahl von 3 bis 8 steht, und

C) 0,001 bis 2 Gew.-% eines Thermostabilisators aus der Gruppe der aliphatisch, teilweise aliphatisch oder aromatisch substituierten Phosphite, bevorzugt mit einem Molekulargewicht größer als 650 g/mol, wobei die Summe der Gewichtsprozente in der thermoplastischen Matrix ii) stets 100 ergibt und wobei das faserförmige Material i) mit der thermoplastischen Matrix ii) imprägniert ist und der Volumenanteil des faserförmigen Materials i) im Faser-Matrix-Halbzeug im Bereich von 25 bis 65 Vol.-% liegt.

Ganz besonders bevorzugt sind Faser-Matrix-Halbzeuge enthaltend

i) mindestens ein faserförmiges Material, ausgewählt aus der Gruppe der Gelege, Gewebe, Geflechte, Gestricke, Vliese, Rovings, Matten, Gesticke und Kombinationen daraus, aus Glasfasern, Carbonfasern, Mineralfasern, Naturfasern, Kunststofffasern und/oder Kombinationen daraus, und
eine thermoplastische Matrix ii) enthaltend

A) 60 bis 96,998 Gew.-% Polycarbonat

B) 3 bis 35 Gew.-% eines oder mehrerer Phosphazene der Formel (I),

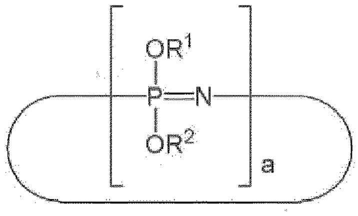

(I)

worin $R^1$, $R^2$ jeweils für Phenyl und a für eine ganze Zahl von 3 bis 8 steht,

C) 0,001 bis 2 Gew.-% eines Thermostabilisators aus der Gruppe der aliphatisch, teilweise aliphatisch oder aromatisch substituierten Phosphite, bevorzugt mit einem Molekulargewicht größer als 650 g/mol, und

D) 0,001 bis 3 Gew.-% wenigstens eines Thermostabilisators ausgewählt aus der Gruppe der sterisch gehinderten Phenole, bevorzugt mit einem Molekulargewicht größer als 600 g/mol, wobei das faserförmige Material i) mit der thermoplastischen Matrix ii) imprägniert ist und der Volumenanteil des faserförmigen Materials i) im Faser-Matrix-Halbzeug im Bereich von 25 bis 65 Vol.-% liegt, wobei die Summe der Gewichtsprozente in der thermoplastischen Matrix ii) stets 100 ergibt.

Ganz besonders bevorzugt sind Faser-Matrix-Halbzeuge enthaltend

i) mindestens ein faserförmiges Material, ausgewählt aus der Gruppe der Gelege, Gewebe, Geflechte, Gestricke, Vliese, Rovings, Matten, Gesticke und Kombinationen daraus, aus Glasfasern, Carbonfasern, Mineralfasern, Naturfasern, Kunststofffasern und/oder Kombinationen daraus, und
eine thermoplastische Matrix ii) enthaltend

A) 60 bis 96,988 Gew.-% Polycarbonat

B) 3 bis 30 Gew.-% eines oder mehrerer Phosphazene der Formel (I),

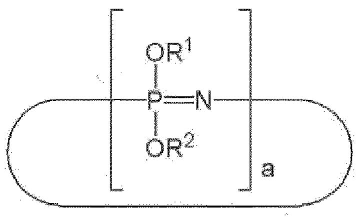

(I)

worin $R^1$, $R^2$ für Phenyl und a für eine ganze Zahl von 3 bis 8 steht,

C) 0,001 bis 2 Gew.-% eines Thermostabilisators aus der Gruppe der aliphatisch oder aromatisch substituierten Phosphite, bevorzugt mit einem Molekulargewicht größer als 650 g/mol,

D) 0,001 bis 3 Gew.-% wenigstens eines Thermostabilisators ausgewählt aus der Gruppe der sterisch gehinderten Phenole, vorzugsweise mit einem Molekulargewicht größer als 600 g/mol, und

E) 0,01 bis 5 Gew.-% mindestens eines Gleit- und Entformungsmittel ausgewählt aus Pentaerythritoltetrastearat oder Ethylenglycoldimontanat, wobei die Summe der Gewichtsprozente in der thermoplastischen Matrix ii) stets 100 ergibt und wobei das faserförmige Material i) mit der thermoplastischen Matrix ii) imprägniert ist und der Volumenanteil des faserförmigen Materials i) im Faser-Matrix-Halbzeug im Bereich von 25 bis 65 Vol.-% liegt.

Insbesondere besonders bevorzugt sind Faser-Matrix-Halbzeuge enthaltend

i) mindestens ein faserförmiges Material, ausgewählt aus der Gruppe der Gelege, Gewebe, Geflechte, Gestricke, Vliese, Rovings, Matten, Gesticke und Kombinationen daraus, aus Glasfasern, Carbonfasern, Mineralfasern, Naturfasern, Kunststofffasern und/oder Kombinationen daraus, und

eine thermoplastische Matrix ii) enthaltend

A) 60 bis 84,86 Gew.-% Polycarbonat,

B) 15 bis 38,4 Gew.-% eines oder mehrerer Phosphazene der Formel (I),

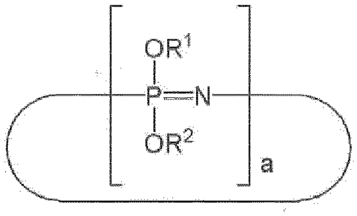

(I)

worin $R^1$, $R^2$ für Phenyl und a für eine ganze Zahl von 3 bis 8 steht,

C) 0,02 bis 0,5 Gew.-% Tetrakis(2,4-di-tert-butylphenyl)-1,1-biphenyl-4,4'-diylbisphosphonit,

D) 0,02 bis 0,5 Gew.-% 3,9-Bis[2-[3-(3-tert-butyl-4-hydroxy-5-methylphenyl) propionyloxy]-1,1-dimethylethyl]-2,4,8,10-tetraoxaspiro[5.5]undecane, und

E) 0,1 bis 0,6 Gew.-% Pentaerythritoltetrastearat, wobei die Summe der Gewichtsprozente in der thermoplastischen Matrix ii) stets 100 ergibt und wobei das faserförmige Material i) mit der thermoplastischen Matrix ii) imprägniert ist und der Volumenanteil des faserförmigen Materials i) im Faser-Matrix-Halbzeug im Bereich von 25 bis 65 Vol.-% liegt.

Insbesondere ganz besonders bevorzugt sind Faser-Matrix-Halbzeuge enthaltend

i) mindestens ein faserförmiges Material, ausgewählt aus der Gruppe der Gelege, Gewebe, Geflechte, Gestricke, Vliese, Rovings, Matten, Gesticke und Kombinationen daraus, aus Glasfasern, Carbonfasern, Mineralfasern, Naturfasern, Kunststofffasern und/oder Kombinationen daraus, und
eine thermoplastische Matrix ii) enthaltend

A) 60 bis 84,86 Gew.-% Polycarbonat,

B) 15 bis 38,4 Gew.-% eines oder mehrerer Phosphazene der Formel (I),

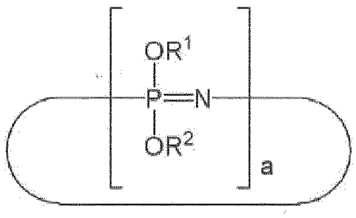

(I)

worin $R^1$, $R^2$ für Phenyl und a für eine ganze Zahl von 3 bis 8 steht,

C) 0,02 bis 0,5 Gew.-% Tetrakis(2,4-di-tert-butylphenyl)-1,1-biphenyl-4,4'-diylbisphosphonit,

D) 0,02 bis 0,5 Gew.-% 3,9-Bis[2-[3-(3-tert-butyl-4-hydroxy-5-methylphenyl) propionyloxy]-1,1-dimethylethyl]-2,4,8,10-tetraoxaspiro[5.5]undecane, und

E) 0,1 bis 0,6 Gew.-% Pentaerythritoltetrastearat, wobei die Summe der Gewichtsprozente in der thermoplastischen Matrix ii) stets 100 ergibt und wobei das faserförmige Material i) mit der thermoplastischen Matrix ii) imprägniert ist und

der Volumenanteil des faserförmigen Materials i) im Faser-Matrix-Halbzeug im Bereich von 25 bis 65 Vol.-% liegt.

## Verfahren

Die Herstellung erfindungsgemäßer Faser-Matrix-Halbzeuge geschieht durch Imprägnieren des faserförmigen Materials i) mit der thermoplastischen Matrix ii).

Bevorzugt werden hierbei die Komponenten der thermoplastischen Matrix ii) bei Temperaturen oberhalb des Schmelzpunktes der Komponente A) mit dem faserförmigen Material i) verpresst. Die Komponenten der thermoplastischen Matrix ii) können dabei in Form einer Mischung vorliegen, wobei die festen Einzelkomponenten bevorzugt vorab-d.h. vor dem Pressvorgang - auf mittlere Teilchengrößen kleiner als 500 μm mittels dem Fachmann bekannter und üblicher Zerkleinerungsverfahren zerkleinert werden.

Besonders bevorzugt werden die Einzelkomponenten der thermoplastischen Matrix ii) in einem vorgelagerten Schritt compoundiert, wobei die einzelnen Komponenten in einem Zweiwellenextruder, bevorzugt bei Temperaturen im Bereich von 270 bis 330°C, gemischt und als Strang ausgetragen werden. Der noch heiße Strang kann entweder direkt flüssig in das Werkzeug zur Imprägnierung des faserförmigen Materials i) überführt, oder aber bis zur Granulierfähigkeit abgekühlt und granuliert werden. Im Falle des letztgenannten Verfahrens können die zur Imprägnierung des faserförmigen Materials i) bestimmten Granulate vor dem Imprägnierprozess in einem weiteren Schritt vermahlen werden, wobei mittlere Teilchengrößen <500 μm bevorzugt sind und mittlere Teilchengrößen <300 μm besonders bevorzugt sind. Zur Bestimmung der mittleren Teilchengröße, siehe oben.

Für den Imprägnierprozess zum erfindungsgemäßen thermoplastischen Faser-Matrix-Halbzeug werden dann aus dem Stand der Technik bekannte Verfahren herangezogen.

Erfindungsgemäß hat das faserförmige Material i) im Faser-Matrix-Halbzeug einen Faservolumenanteil im Bereich von 25 bis 65 Vol. %, bevorzugt im Bereich von 30 bis 60 Vol. %, besonders bevorzugt im Bereich von 40 bis 55 Vol. %, wobei das Gesamtvolumen des Halbzeugs 100 ist. Der Faservolumenanteil ist dabei der prozentuale Volumenanteil des faserförmigen Materials i) im Faser-Matrix-Halbzeug. Er lässt sich aus der Dichte der thermoplastischen Matrix und der literaturbekannten Dichte des faserförmigen Materials i) auf einfache Weise berechnen. Die Dichte der thermoplastischen Matrix ii) kann dabei beispielsweise nach ISO1183 bestimmt werden.

Es ist auch möglich, das Faser-Matrix-Halbzeug sandwichartig aufzubauen, indem man verschiedene erfindungsgemäß einzusetzende faserförmige Materialien i) mit verschiedenen erfindungsgemäßen Varianten der thermoplastischen Matrix ii) kombiniert. Bevorzugt wird in diesem Falle eine Imprägnierung durch Heißverpressen mit gleichen oder unterschiedlichen Lagen an faserförmigen Materialien i) mit gleichen oder unterschiedlichen Lagen der thermoplastischen Matrix ii) vorgenommen.

Das Imprägnieren wird unter erhöhtem Druck bei Temperaturen vorzugsweise oberhalb des Schmelzpunktes der Komponente A), besonders bevorzugt bei Temperaturen im Bereich von 270°C bis 330°C ganz besonders bevorzugt im Bereich von 290°C bis 320°C durchgeführt, wofür insbesondere Heißpressen oder beheizte Walzen eingesetzt werden. Das Imprägnieren ist dem Fachmann beispielsweise aus EP1923420 A1 bekannt.

Die aus dem Pressvorgang erhaltenen Faser-Matrix-Halbzeuge können anschließend durch Umformen gemäß dem oben beschriebenen Stand der Technik weiter verarbeitet werden.

Möglich ist auch das nachträgliche Aufbringen weiterer Schichten oder das Aufspritzen weiterer Funktionselemente mittels Spritzguss an das erfindungsgemäße Faser-Matrix-Halbzeug sowie das nachträgliche Lackieren des erfindungsgemäßen Faser-Matrix-Halbzeugs.

## Verwendung

Die vorliegende Erfindung betrifft aber auch die Verwendung der erfindungsgemäßen Faser-Matrix-Halbzeuge in Bauteilen mit erhöhten Flammschutzanforderungen, bevorzugt als mechanisch zu belastende Bauteile in IT-Geräten, insbesondere in Notebooks, Mobiltelefonen oder Tablet-Computern, als Gehäusematerial für elektrische oder elektronische Bauelemente, als Einbauelement zur Abschirmung u.a. von kurzschlussbedingten Lichtbögen in Leitungsschutzschaltern sowie allgemein als Flammbarriere in Gebäuden, Personenkraftwagen, Lastkraftwagen , in Einrichtungen der Schifffahrt und in öffentlichen Verkehrsmitteln wie z.B. in Schienenfahrzeugen und Bussen. Besonders bevorzugt ist die Verwendung in IT-Geräten.

Die vorliegende Erfindung wird anhand der folgenden Beispiele näher erläutert. Diese sind jedoch in keiner Weise als einschränkend zu verstehen.

## Beispiele

### Faser-Matrix-Halbzeuge

Die Faser-Matrix-Halbzeuge im Rahmen der vorliegenden Erfindung wurden durch Heißverpressen von Fasermaterial und Thermoplast-Matrix bei Temperaturen im Bereich von 290°C bis 320°C hergestellt. Die Materialdicke ergibt sich dabei aus der Anzahl der Fasermateriallagen und dem gewünschten Faservolumenanteil.

Die Thermoplastmatrix ii) wurde vor ihrer Verarbeitung zum Faser-Matrix-Halbzeug durch Compoundierung angefertigt. Die einzelnen Komponenten wurden hierzu in einem Zweiwellenextruder (ZSK 25 Compounder der Fa. Coperion Werner & Pfleiderer (Stuttgart, Deutschland)) bei Temperaturen im Bereich von 290 bis 310°C gemischt, als Strang ausgetragen, bis zur Granulierfähigkeit abgekühlt, granuliert und anschließend gemahlen.

Die Flammwidrigkeit der Faser-Matrix-Halbzeuge wurde nach der Methode UL94V (Underwriters Laboratories Inc. Standard of Safety, "Test for Flammability of Plastic Materials for Parts in Devices and Appliances", S. 14 bis S. 18 Northbrook 1998) bestimmt. Die Prüfkörper der Abmessung 125 mm •13 mm in Dicken von 0,5 mm, 0,8 mm, bzw. 2,0 mm wurden aus den vorgefertigten Faser-Matrix-Halbzeugen mit einer Wasserstrahlschneidanlage ausgeschnitten. Erfüllt eine Zusammensetzung die Kriterien nach UL94 V-0, so wird die entsprechende Zusammensetzung mit "Klasse V-0: ja" beschrieben. Wird wegen zu langer Nachbrennzeiten oder brennendem Abtropfen nur die Klasse V-1, V-2 oder "nicht bestanden" erreicht, so ist die entsprechende Zusammensetzung mit "Klasse V-0: nein" gekennzeichnet.

Mechanische Kennwerte erhielt man aus Biegeexperimenten in Anlehnung an ISO 178. Die hierfür verwendeten Prüfkörper der Abmessung 80 mm •10 mm •2,0 mm wurden aus den vorgefertigten Faser-Matrix-Halbzeugen mit einer Wasserstrahlschneidanlage ausgeschnitten.

In den Versuchen wurden verwendet:

### Faserförmiges Material i):

FG: Köpergewebe aus Filamentglas mit Webart Twill2/2 mit Silanschlichte und einem Flächengewicht von 290 g/m$^2$. Die Dichte des eingesetzten Glases lag bei 2,56 g/cm$^3$ CF: Köpergewebe aus Carbonfaser mit Webart Twill2/2 mit einem Flächengewicht von 200 g/m$^2$. Die Dichte der eingesetzten Carbonfaser lag bei 1,8 g/cm$^3$.

### Thermoplastische Matrix ii):

Komponente A1) Lineares Polycarbonat (Makrolon® 2805 von Bayer MaterialScience AG, Leverkusen, Deutschland) auf Basis Bisphenol A mit einer Viskosität $\eta_{rel}$ von ca. 1,29 (Meßbedingungen: 5 g Polycarbonat pro Liter Methylenchlorid, 25°C) und einem mittleren Molekulargewicht Mw von ca. 29 000 g/mol (bestimmt mit GPC-Methoden gegen Polycarbonatstandard).

Komponenten B1) Phenoxyphosphazen-Oligomer [CAS-Nr. 1203646-63-2] (Rabitle® FP110 der Fa. Fushimi Pharmaceutical Co. Ltd, Kagawa, Japan) eingesetzt.

Komponente X1): Tetrakis(2,6-dimethylphenyl)-m-phenylbisphosphat, [CAS-Nr. 139189-30-3] (PX-200 der Fa. Daihachi Chemical Industry Co., Ltd., Osaka, Japan)

Komponente X2): Kaliumperfluoro-1-butansulfonat [CAS-Nr. 29420-49-3] (Bayowet® C4 der Fa. Lanxess Deutschland GmbH, Köln, Deutschland)

Komponente C1): Tetrakis(2,4-di-tert-butylphenyl)-1,1-biphenyl-4,4'-diylbisphosphonit [CAS Nr. 38613-77-3] (Hostanox® P-EPQ der Fa. Clariant International Ltd., Muttenz, Schweiz)

Komponente D1) 3,9-Bis[2-[3-(3-tert-butyl-4-hydroxy-5-methylphenyl)propionyloxy]-1,1-dimethylethyl]-2,4,8,10-tetraoxaspiro[5.5]undecan, [CAS-Nr. 90498-90-1] (ADK STAB AO 80 der Fa. Adeka-Palmerole, Mulhouse, Frankreich)

Komponente E) Pentaerythritoltetrastearat [CAS-Nr. 115-83-3] (Loxiol® P 861 der Fa. Emery Oleochemicals GmbH, Düsseldorf, Germany)

**Tabelle 1:** In den Beispielen und Vergleichsbeispielen eingesetzte thermoplastische Matrix ii) als **M1** bis **M4** bezeichnet

| | | M1 | M2 | M3 | M4 |
|---|---|---|---|---|---|
| Komp. A1 | [%] | 79,84 | 69,84 | 79,84 | 99,79 |
| Komp. B1 | [%] | 20 | 30 | | |
| Komp. X1 | [%] | | | 20 | |
| Komp. X2 | [%] | | | | 0,05 |

(fortgesetzt)

| | | M1 | M2 | M3 | M4 |
|---|---|---|---|---|---|
| Komp. C1 | [%] | 0,02 | 0,02 | 0,02 | 0,02 |
| Komp. D1 | [%] | 0,04 | 0,04 | 0,04 | 0,04 |
| Komp. E | [%] | 0,1 | 0,1 | 0,1 | 0,1 |

**Tabelle 2: Thermoplastisches Faser-Matrix Halbzeug**

| | | Bsp. 1 | Bsp. 2 | Bsp. 3 | Bsp. 4 | Bsp. 5 | Vgl. 1 | Vgl. 2 |
|---|---|---|---|---|---|---|---|---|
| Matrix ii) | | M1 | M1 | M1 | M1 | M2 | M3 | M4 |
| Fasermaterial i) | | CF | CF | CF | FG | CF | CF | CF |
| Faservolumenanteil | [Vol-%] | 45 | 50 | 57 | 50 | 45 | 45 | 45 |
| UL94 bei 0,5 mm | Klasse V-0 | ja | - | - | - | - | - | - |
| UL94 bei 0,8 mm | Klasse V-0 | ja | - | Ja | - | - | - | - |
| UL94 bei 2,0 mm | Klasse V-0 | ja | Ja | - | ja | ja | nein | nein |
| Biegemodul | GPa | 45 | 50 | - | 21 | - | - | - |
| Biegefestigkeit | MPa | 600 | 650 | - | 480 | - | - | - |

Die Beispiele und Vergleichsbeispiele in Tabelle 2 zeigen, dass bei Verwendung einer Kombination aus erfindungsgemäß einzusetzender Thermoplastmatrix ii) sowohl im Falle der erfindungsgemäß einzusetzenden Glasfasergewebe FG als auch im Falle der erfindungsgemäß einzusetzenden Carbonfasergewebe CF bei verschiedenen Wandstärken eine UL94-Klassifizierung von V-0 erreicht wurde. Dies gilt über einen weiten Bereich unterschiedlicher Faservolumenanteile. Im Falle einer nichterfindungsgemäßen Polymermatrix wurden diese Flammklassifizierungen nicht erreicht (Vgl.1 und Vgl. 2).

**Patentansprüche**

**1.** Faser-Matrix-Halbzeug enthaltend

i) mindestens ein faserförmiges Material, ausgewählt aus der Gruppe der Gelege, Gewebe, Geflechte, Gestricke, Vliese, Rovings, Matten, Gesticke und Kombinationen daraus, aus Glasfasern, Carbonfasern, Mineralfasern, Naturfasern, Kunststofffasern und/oder Kombinationen daraus, und
ii) eine thermoplastische Matrix enthaltend

A) 10 bis 97 Gew.-%, bevorzugt 20 bis 90 Gew.-%, besonders bevorzugt 35 bis 82 Gew.-% mindestens eines Thermoplasten aus der Gruppe der Polycarbonate, und
B) 3 bis 90 Gew.-%, bevorzugt 10 bis 35 Gew.-%, besonders bevorzugt 18 bis 32 Gew.-% eines oder mehrerer Phosphazene der Formel (I) und/oder eines oder mehrerer Phosphazene der Formel (II),

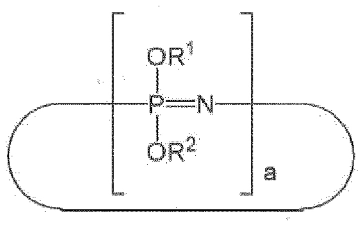

(I)

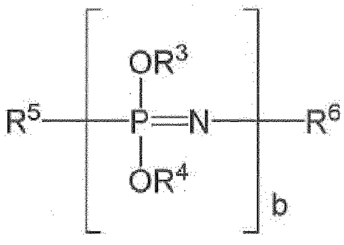

(II)

worin

$R^1$, $R^2$ gleich oder verschieden sind und für ein Alkyl, Cycloalkyl, Aryl oder Alkylaryl stehen,
$R^3$, $R^4$ gleich oder verschieden sind und für Alkyl, Cycloalkyl, Aryl oder Alkylaryl stehen,
$R^5$ für $-N{=}P(OR^3)_3$, $-N{=}P(OR^4)_3$, $-N{=}P(O)OR^3$ oder $-N{=}P(O)OR^4$ steht,
$R^6$ für $-N{=}P(OR^3)_4$, $-N{=}P(OR^4)_4$, $-N{=}P(O)(OR^3)_2$ oder $-N{=}P(O)(OR^4)_2$ steht,

a für eine ganze Zahl im Bereich von 3 bis 25 steht und
b für eine ganze Zahl im Bereich von 3 bis 10000 steht,

wobei die Summe der Gewichtsprozente in der thermoplastischen Matrix ii) stets 100 ergibt und wobei das faserförmige Material i) mit der thermoplastischen Matrix ii) imprägniert ist und der Volumenanteil des faserförmigen Materials i) im Faser-Matrix-Halbzeug im Bereich von 25 bis 65 Vol.-% liegt.

2. Faser-Matrix-Halbzeug gemäß Anspruch 1, **dadurch gekennzeichnet, dass** als Polycarbonate Homopolycarbonate und Copolycarbonate auf Basis der Bisphenole der allgemeinen Formel (IV),

HO-Z-OH (IV)

worin Z ein divalenter organischen Rest mit 6 bis 30 C-Atomen ist, der eine oder mehrere aromatische Gruppen enthält, eingesetzt werden.

3. Faser-Matrix-Halbzeug gemäß Anspruch 2, **dadurch gekennzeichnet, dass** die Polycarbonate auf Bisphenolen der Formel (IVa) basieren

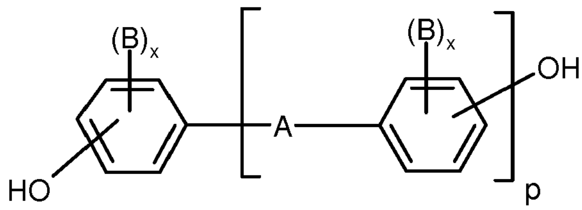

(IVa),

worin

A für eine Einfachbindung oder für einen Rest der Reihe $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen steht, woran weitere aromatische gegebenenfalls Heteroatome enthaltende Ringe kondensiert sein können,
oder A für einen Rest der Formel (V) oder (VI) steht

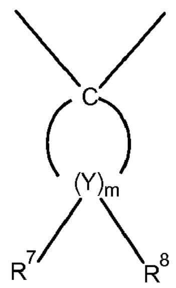

(V)

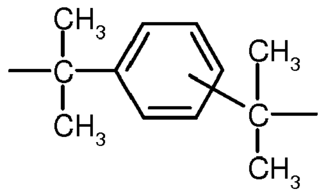

(VI)

$R^7$ und $R^8$ für jedes Y individuell wählbar, unabhängig voneinander für Wasserstoff oder $C_1$-$C_6$-Alkyl, vorzugsweise Wasserstoff, Methyl oder Ethyl, stehen,
B jeweils für $C_1$-$C_{12}$-Alkyl, vorzugsweise Methyl, Halogen, vorzugsweise Chlor und/oder Brom steht,

x jeweils unabhängig voneinander für 0, 1 oder 2 steht,
p für 1 oder 0 steht,

Y für Kohlenstoff steht, und
m eine ganze Zahl von 4 bis 7 bedeutet, mit der Maßgabe, dass an mindestens einem Kohlenstoffatom Y, $R^7$ und $R^8$ gleichzeitig Alkyl sind.

**4.** Faser-Matrix-Halbzeug gemäß einem der Ansprüche 1 bis 3, **dadurch gekennzeichnet, dass** $R^1$, $R^2$, $R^3$ und $R^4$ für Aryl und/oder Alkylaryl stehen, wobei als Aryl-Gruppen bevorzugt solche mit 6-20 Kohlenstoffatomen, insbesondere Phenyl, Methylphenyl, Dimethylphenyl, Trimethylphenyl und/oder Naphtyl eingesetzt werden.

**5.** Faser-Matrix-Halbzeug gemäß einem der Ansprüche 1 bis 4, **dadurch gekennzeichnet, dass** Phosphazene der Formel (I) eingesetzt werden, bei denen a in Formel (I) für eine ganze Zahl im Bereich von 3 bis 8 steht.

**6.** Faser-Matrix-Halbzeug gemäß einem der Ansprüche 1 bis 4, **dadurch gekennzeichnet, dass** Phosphazene der Formel (II) eingesetzt werden, bei denen **b** für eine ganze Zahl im Bereich von 3 bis 1000 steht.

**7.** Faser-Matrix-Halbzeug gemäß einem der Ansprüche 1 bis 6, **dadurch gekennzeichnet, dass** zusätzlich zu den Komponenten A) und B) noch Komponente C) 0,001 bis 2 Gew.-% wenigstens eines Thermostabilisators aus der Gruppe der aliphatisch oder aromatisch substituierten Phosphite eingesetzt wird, wobei wenigstens eine der Komponenten A) oder B) im Rahmen der angegebenen Mengenbereiche so zu variieren ist, dass die Summe aller Gewichtsprozente der Komponenten A), B) und C) bezogen auf die thermoplastische Matrix ii) stets 100 ergibt.

**8.** Faser-Matrix-Halbzeug gemäß Anspruch 7, **dadurch gekennzeichnet, dass** das Molekulargewicht des als Komponente C) einzusetzenden Thermostabilisators größer als 650 g/mol ist.

**9.** Faser-Matrix-Halbzeug gemäß Anspruch 7 oder 8, **dadurch gekennzeichnet, dass** als Komponente C) aliphatisch substituierte Phosphite eingesetzt werden, die einen Strukturbaustein der Formel (VII) enthalten, wobei $R^9$ für substituierte ArylReste steht, die gleich oder verschieden voneinander sein können

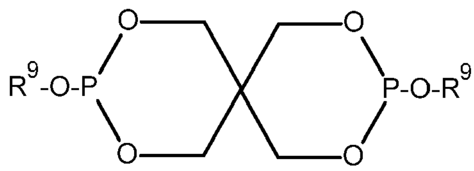

(VII).

**10.** Faser-Matrix-Halbzeug gemäß einem der Ansprüche 7 bis 9, **dadurch gekennzeichnet, dass** Bis(2,4-dicumylphenyl)-pentaerythritol-diphosphit oder Tetrakis(2,4-di-tert-butylphenyl)-1,1-biphenyl-4,4'-diylbisphosphonit eingesetzt wird.

**11.** Faser-Matrix-Halbzeug gemäß einem der Ansprüche 1 bis 10, **dadurch gekennzeichnet, dass** die thermoplastische Matrix ii) zusätzlich zu den Komponenten A) bis C) oder anstelle von C) noch D) 0,001 bis 3 Gew.-% wenigstens eines Thermostabilisators ausgewählt aus der Gruppe der sterisch gehinderten Phenole eingesetzt wird, wobei es sich um Verbindungen mit phenolischer Struktur handelt, die am phenolischen Ring mindestens eine sterisch anspruchsvolle Gruppe aufweisen und wobei die Summe aller Gewichtsprozente der Komponenten A), B), C), D) oder A), B), D) bezogen auf die thermoplastische Matrix ii) stets 100 ergibt.

**12.** Faser-Matrix-Halbzeug gemäß Anspruch 11, **dadurch gekennzeichnet, dass** als sterisch gehinderte Phenole Verbindungen mit mindestens einem Molekülbaustein der Formel (IX) eingesetzt werden,

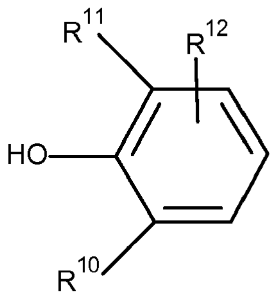

(IX)

worin $R^{10}$ und $R^{11}$ für eine Alkylgruppe, für eine substituierte Alkylgruppe oder für eine substituierte Triazolgruppe stehen, wobei die Reste $R^{10}$ und $R^{11}$ gleich oder verschieden sein können und $R^{12}$ für eine Alkylgruppe, für eine substituierte Alkylgruppe oder für eine gegebenenfalls substituierte Alkoxygruppe steht.

**13.** Verfahren zur Herstellung der Faser-Matrix-Halbzeuge gemäß einem der Ansprüche 1 bis 12, **dadurch gekennzeichnet, dass** man das faserförmige Material i) mit der thermoplastischen Matrix ii) imprägniert.

**14.** Verwendung der Faser-Matrix-Halbzeuge gemäß einem der Ansprüche 1 bis 12 in Bauteilen mit erhöhten Flammschutzanforderungen, bevorzugt als mechanisch zu belastende Bauteile in IT-Geräten, insbesondere in Notebooks, Mobiltelefonen oder Tablet-Computern, als Gehäusematerial für elektrische oder elektronische Bauelemente, als Einbauelement zur Abschirmung u.a. von kurzschlussbedingten Lichtbögen in Leitungsschutzschaltern sowie allgemein als Flammbarriere in Gebäuden, Personenkraftwagen, Lastkraftwagen, in Einrichtungen der Schifffahrt und in öffentlichen Verkehrsmitteln.

Europäisches Patentamt
European Patent Office
Office européen des brevets

# EUROPÄISCHER RECHERCHENBERICHT

Nummer der Anmeldung
EP 14 19 3396

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | DE 41 16 800 A1 (BAYER AG [DE]) 26. November 1992 (1992-11-26) * Ansprüche 1,8; Beispiel 5 * ----- | 1-14 | INV. C08J5/10 C08J5/24 C08K5/5399 |
| X | US 2009/023351 A1 (KASHIHARA KEIKO [JP] ET AL) 22. Januar 2009 (2009-01-22) * Absatz [0016]; Ansprüche 1,3,4,9,15 * ----- | 1-14 | |
| Y | US 2013/313493 A1 (WEN LIANG [CN] ET AL) 28. November 2013 (2013-11-28) * Absätze [0003], [0013], [0093], [0104], [0107], [0108], [0112]; Ansprüche 1,6-12,15,18,41 * ----- | 1-14 | |
| X | EP 2 410 021 A1 (TORAY INDUSTRIES [JP]) 25. Januar 2012 (2012-01-25) * Absätze [0021], [0022], [0066], [0068], [0069], [0072], [0113], [0114], [0119] - [0141], [0168], [0169]; Ansprüche 1,4,5,10-14,18 * ----- | 1-14 | |
| | | | RECHERCHIERTE SACHGEBIETE (IPC) |
| | | | C08J C08K |

Der vorliegende Recherchenbericht wurde für alle Patentansprüche erstellt

1

| Recherchenort | Abschlußdatum der Recherche | Prüfer |
|---|---|---|
| München | 24. April 2015 | Pamies Olle, Silvia |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 14 19 3396

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2015

| Im Recherchenbericht angeführtes Patentdokument | Datum der Veröffentlichung | Mitglied(er) der Patentfamilie | Datum der Veröffentlichung |
|---|---|---|---|
| DE 4116800 A1 | 26-11-1992 | KEINE | |
| US 2009023351 A1 | 22-01-2009 | US 2009023351 A1 | 22-01-2009 |
| | | WO 2007096945 A1 | 30-08-2007 |
| US 2013313493 A1 | 28-11-2013 | CN 104334638 A | 04-02-2015 |
| | | CN 104350098 A | 11-02-2015 |
| | | CN 104364313 A | 18-02-2015 |
| | | CN 104395402 A | 04-03-2015 |
| | | CN 104395403 A | 04-03-2015 |
| | | EP 2855570 A1 | 08-04-2015 |
| | | EP 2855575 A2 | 08-04-2015 |
| | | EP 2855581 A1 | 08-04-2015 |
| | | EP 2855585 A1 | 08-04-2015 |
| | | EP 2855586 A1 | 08-04-2015 |
| | | EP 2855587 A1 | 08-04-2015 |
| | | EP 2855588 A1 | 08-04-2015 |
| | | EP 2855593 A2 | 08-04-2015 |
| | | KR 20150013758 A | 05-02-2015 |
| | | KR 20150013814 A | 05-02-2015 |
| | | KR 20150013897 A | 05-02-2015 |
| | | US 2013313493 A1 | 28-11-2013 |
| | | US 2013317141 A1 | 28-11-2013 |
| | | US 2013317143 A1 | 28-11-2013 |
| | | US 2013317144 A1 | 28-11-2013 |
| | | US 2013317145 A1 | 28-11-2013 |
| | | US 2013317146 A1 | 28-11-2013 |
| | | US 2013317147 A1 | 28-11-2013 |
| | | US 2013317148 A1 | 28-11-2013 |
| | | WO 2013175445 A2 | 28-11-2013 |
| | | WO 2013175450 A2 | 28-11-2013 |
| | | WO 2013175451 A1 | 28-11-2013 |
| | | WO 2013175453 A1 | 28-11-2013 |
| | | WO 2013175455 A1 | 28-11-2013 |
| | | WO 2013175456 A1 | 28-11-2013 |
| | | WO 2013177497 A1 | 28-11-2013 |
| | | WO 2013177558 A1 | 28-11-2013 |
| EP 2410021 A1 | 25-01-2012 | CN 102300936 A | 28-12-2011 |
| | | EP 2410021 A1 | 25-01-2012 |
| | | HK 1161283 A1 | 10-10-2014 |
| | | JP 5505304 B2 | 28-05-2014 |
| | | KR 20110130385 A | 05-12-2011 |
| | | TW 201041944 A | 01-12-2010 |
| | | US 2012028047 A1 | 02-02-2012 |
| | | WO 2010107022 A1 | 23-09-2010 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 14 19 3396

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2015

| Im Recherchenbericht angeführtes Patentdokument | Datum der Veröffentlichung | Mitglied(er) der Patentfamilie | Datum der Veröffentlichung |
|---|---|---|---|
| | | | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2014091825 A
- JP 2013256616 A
- DE 19923480 A1
- DE 202006019341 U1
- DE 102009051058 A1
- DE 102010053381 A1
- DE 102011117338 A1
- DE 102012015438 A1
- DE 102012111087 B3
- DE 4116800 A1
- DE 4104692 A1
- DE 69803697 T2
- DE 69130111 T2
- EP 0399320 B2
- EP 2468810 A1
- US 3028635 A
- US 3062781 A
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 105550 A
- US 3288864 A
- JP 60035150 A
- US 4334106 A
- DE 1031512 A
- US 3442864 A
- JP 47014742 A
- US 5399659 A
- DE 19539290 A
- EP 728811 A
- DE 1961668 A
- WO 9740092 A
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A
- EP 1923420 A1


### In der Beschreibung aufgeführte Nicht-Patentliteratur


- **BODO CARLOWITZ.** Tabellarische Übersicht über die Prüfung von Kunststoffen. Giesel-Verlag für Publizität, 1992, 16-17
- Kunststoffpraxis: Eigenschaften. **HERRLICH ; LAND ; KUNZ ; MICHAELI.** WEKA MEDIA Kissing. 2004, 1-5
- **MICHAELI.** Einführung in die Kunststoffverarbeitung.pdf. Carl Hanser Verlag, 2010, 185-190
- Industrievereinigung Verstärkte Kunststoffe. Handbuch Faserverbund-Kunststoffe. Vieweg + Teubner, 2010, 477-482
- **SCHÜRMANN.** Konstruieren mit Faser-Kunststoff¬-Verbunden. Springer-Verlag, 2005, 156-157
- Faserverstärkte Kunststoffe verarbeiten. Kunststoffe. Carl Hanser Verlag, Oktober 2003, 189-194
- **OBERBACH ; BAUR ; BRINKMANN ; SCHMACHTENBERG.** Saechtling Kunststoff Taschenbuch. Carl Hanser Verlag, 2004, 644-647
- **OBERBACH ; BAUR ; BRINKMANN ; SCHMACHTENBERG.** Saechtling Kunststoff Taschenbuch. Carl Hanser Verlag, 2004, 648
- **OBERBACH ; BAUR ; BRINKMANN ; SCHMACHTENBERG.** Saechtling Kunststoff Taschenbuch. Carl Hanser Verlag, 2004, 650-652, 778-779

- **OBERBACH ; BAUR ; BRINKMANN ; SCHMACHTENBERG.** Saechtling Kunststoff Taschenbuch. Carl Hanser Verlag, 2004, 648-650
- Kunststoff-Handbuch. Carl Hanser Verlag, 1998, vol. 3/4, 106-107
- Maßgeschneiderte Verstärkungstextilien. **GELEGEN ; GEWEBEN ; GEWIRKEN ; GEFLECHTEN ; GESTRICKEN ; MATTEN ; GESTICKEN.** Kunststoffe. Carl Hanser Verlag, Juni 2003, 46-49
- **K.L. LÖWENSTEIN.** The Manufacturing Technology of Continuous Glass Fibres. Elsevier Scientific Publishing Corp, 1983
- Chemistry and Physics of Polycarbonates. **H. SCHNELL.** Polymer Reviews. Interscience Publishers, 1964, vol. 9, 77-98
- Chemistry and Physis of Polycarbonates. **H. SCHNELL.** Polymer Reviews. Interscience Publishers, 1964, vol. 9, 31-76
- Polycarbonates. **D. FREITAG ; U. GRIGO ; P. R. MÜLLER ; H. NOUVERTNE.** Encyclopedia of Polymer Science and Engineering. 1988, vol. 11, 648-718
- Polycarbonate. **U. GRIGO ; K. KIRCHER ; P.R. MÜLLER.** Becker, Braun, Kunststoff-Handbuch, Band 3/1, Polycarbonate, Polyacetale, Polyester, Celluloseester. Carl Hanser Verlag, 1992, vol. 3-1, 117-299
- **D.C. PREVORSEK ; B.T. DEBONA ; Y. KESTEN.** Synthesis of Poly(estercarbonate) Copolymers. *Journal of Polymer Science, Polymer Chemistry Edition,* 1980, vol. 19, 75-90
- Chemistry and Physics of Polycarbonates. **H. SCHNELL.** Polymer Reviews. Interscience Publishers, 1964, vol. 9, 44-51
- **C.M. KECK.** Moderne Pharmazeutische Technologie. 2009
- *QUANTACHROME PARTIKELWELT,* Juni 2007, 1-16
- **SMITH ; MARCH.** March's Advanced Organic Chemistry. Wiley-Interscience, 2001
- **ULLMANN.** Enzyklopädie der Technischen Chemie. 1980, vol. 19, 280 ff